(19) Europäisches Patentamt
European Patent Office
Office européen des brevets

(11) EP 4 240 906 B1

(12) **EUROPEAN PATENT SPECIFICATION**

(45) Date of publication and mention of the grant of the patent:
**28.08.2024 Bulletin 2024/35**

(21) Application number: **21802355.4**

(22) Date of filing: **03.11.2021**

(51) International Patent Classification (IPC):
***D21J 3/00*** (2006.01) ***B27N 3/04*** (2006.01)
***C08L 101/00*** (2006.01) ***B27N 3/00*** (2006.01)
***B27N 3/02*** (2006.01) ***B27N 3/18*** (2006.01)
***C08J 5/04*** (2006.01) ***C08L 77/04*** (2006.01)

(52) Cooperative Patent Classification (CPC):
(C-Sets available)
**D21J 3/00; B27N 3/002; B27N 3/02; B27N 3/04; B27N 3/18; C08G 69/10; C08J 5/04; C08J 5/045; C08L 1/02; C08L 97/02; C08L 101/005;**
C08J 2300/202; C08J 2377/04 (Cont.)

(86) International application number:
**PCT/EP2021/080530**

(87) International publication number:
**WO 2022/096518 (12.05.2022 Gazette 2022/19)**

(54) **COMPOSITIONS SUITABLE FOR ENHANCING THE FLEXURAL PROPERTIES OF OBJECTS CONTAINING VEGETABLE FIBERS**

FÜR OBJEKTE MIT VERBESSERTEN BIEGEEIGENSCHAFTEN GEEIGNETE ZUSAMMENSETZUNGEN

COMPOSITIONS APPROPRIÉES POUR OBJETS PRÉSENTANT DES PROPRIÉTÉS DE FLEXION AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2020 EP 20205917**

(43) Date of publication of application:
**13.09.2023 Bulletin 2023/37**

(73) Proprietor: **Covestro (Netherlands) B.V.**
**6167 RD Geleen (NL)**

(72) Inventors:
- **HAYDEN, Douglas, Richard**
  **3434EW Nieuwegein (NL)**
- **KONING, Cornelis, Eme**
  **3434EW Nieuwegein (NL)**
- **VELDHUIS, Theo**
  **3434EW Nieuwegein (NL)**

(74) Representative: **Levpat**
**c/o Covestro AG**
**Gebäude K12**
**51365 Leverkusen (DE)**

(56) References cited:
**WO-A1-2016/009054** **WO-A2-2008/057390**
**CN-A- 110 903 786** **US-B2- 8 846 842**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 1/02, C08L 77/04;**
**C08L 97/02, C08L 77/04;**
**C08L 101/005, C08K 7/02;**
**C08L 101/005, C08L 97/02**

## Description

The invention relates to compositions comprising a constituent-A, which constituent-A consists of a polylysine component and a fibrous component which fibrous component consists of at least one fibrous element which fibrous element comprises vegetable fibers, and wherein the fibrous element is free of any fibers other than the vegetable fibers, and wherein the composition is free of any fibers other than the vegetable fibers of the fibrous component (compositions of the invention). The invention further relates to processes for obtaining an object from the compositions of the invention. The invention further relates to objects such as sheets, tapes, sticks, strips, films, cloths, containers, boards, panels, beams, frames, planks, engineered wood (e.g. fibreboards) obtained by said processes. The invention further relates to articles comprising a) a part which is solid at 23 °C and 1 atm; and one or both of b) and c), wherein b) is a composition of the invention, and c) is an object of the invention (articles of the invention). The invention further relates to various uses of any one or any combination of the compositions of the invention, the objects of the invention and the articles of the invention.

In the context of this invention but also in the literature, polylysine refers to several types of lysine homopolymers which may differ from each other in terms of stereochemistry and link position. Lysine (in either of its two enantiomeric forms, namely D- and L-lysine; 'L' and 'D' refer to the chirality at lysine's central carbon atom) which is the precursor amino acid, contains two amino groups; one at the $\alpha$-carbon and one at the $\varepsilon$-carbon. Either of these two amino groups can be the location of polymerization, resulting in $\alpha$-polylysine or $\varepsilon$-polylysine.

Fibers (or fibres; the terms are used interchangeably in the context of this invention) constitute a class of materials that are continuous filaments or are in discrete elongated pieces, similar to lengths of thread. Human uses for fibers are diverse. They can be spun into filaments, string or rope, used as a reinforcing agent in composites into sheets to make products such as paper or felt. Fibers are often used in the manufacture of other materials. Fibers may be recycled. In the context of this invention the term 'fiber' includes also recycled fibers.

On the basis of their origin, fibers are divided into two main categories namely natural and synthetic fibers. Synthetic fibers are also known as man-made or artificial or manufactured fibers.

Natural fibers are further divided into: i) mineral fibers (e.g. asbestos, wollastonite, attapulgite, halloysite), ii) animal fibers (e.g. silk, wool, sinew, cashmere, mohair, angora, animal hair), and iii) vegetable fibers are based on arrangements of cellulose (known also as 'natural cellulose fibers'), or arrangements of cellulose with lignin (known also as 'natural lignocellulosic fibers'), and are derived from sources of natural cellulose or natural cellulose with lignin, such as from plants which are living organisms of the kind exemplified by trees, bamboos, shrubs, herbs, grasses, ferns, and mosses, absorbing water and inorganic substances through its roots, and synthesizing nutrients in its leaves by photosynthesis using the green pigment chlorophyll. Examples of vegetable fibers include but are not limited to wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf (hibiscus cannabinus) fibers, straw fibers, grass fibers, leaf fibers, and mixtures thereof.

Synthetic (also known as man-made or artificial or manufactured fibers) are further divided into: i) cellulose fibers regenerated from natural resources, known also as cellulose-regenerated fibers (e.g. rayon, modal, Lyocell, cellulose acetate, cellulose triacetate), ii) inorganic fibers and iii) polymer fibers (also known as synthetic polymer fibers).

Cellulose fibers are a subset of fibers. Cellulose fibers are fibers of cellulose from any source, either natural or manufactured (the latter is also known as synthetic cellulose fibers). Therefore, cellulose fibers can be natural (e.g. cellulose fibers from sources of natural cellulose such as from trees (including bamboos), seaweed, or synthetic (e.g. cellulose fibers regenerated from natural cellulose such as rayon, modal, Lyocell, cellulose acetate, cellulose triacetate). The synthetic cellulose fibers are also known in the art as man-made cellulose fibers or as regenerated cellulose fibers or as manufactured cellulose fibers or as artificial cellulose fibers.

In the context of this invention the terms "synthetic cellulose fibers", "man-made cellulose fibers" or "manufactured cellulose fibers" or "artificial cellulose fibers" or "regenerated cellulose fibers" are used interchangeably and these terms are used to distinguish the synthetic cellulose fibers from the natural cellulose fibers and the natural lignocellulosic fibers, the latter two being vegetable fibers.

One of the most important type of vegetable fibers are wood (including recycled wood) fibers. There are two main types of wood: a) softwoods and b) hardwoods. Softwoods come from cone bearing trees. Exemplary softwoods include but are not limited to pine, redwood, and fir. Softwoods can be used for furniture and doors but are mostly used in construction for roof trusses and stud partitions. Hardwoods come from leaved trees. These trees may have flowers and may produce seeds such as nuts and fruit. Exemplary hardwoods include but are not limited to oak, beech and mahogany. Hardwoods are denser than softwoods and are stronger and more durable as well. They are used for furniture and are typically more expensive than softwoods. Wood may be recycled. In the context of this invention the term 'wood' includes also recycled wood.

During the wood production, wood (softwoods, hardwoods) is used to manufacture timber (also known as lumber); timber is effectively wood manufactured into beams and planks. In the context of this invention the term 'solid

wood' is used to distinguish between timber and engineered wood.

Engineered wood (also known as mass timber, composite wood, man-made wood, or manufactured board) includes a range of derivative wood products which are manufactured by binding or fixing together the various wood elements (e.g. fibers, filaments, yarns, strips, strands, threads, staple fiber yarns, particles, chips (e.g. wood chips, sawdust), shavings (e.g. sawmill shavings), flakes, lamellae, pulp (e.g. wood pulp), and mixtures thereof), via various methods of fixation to form effectively a composite material. Exemplary types of engineered wood include but are not limited to plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites. Engineered wood products are engineered to precise design specifications, which are tested to meet national or international standards and provide uniformity and predictability in their structural performance. Engineered wood products are used in a variety of applications, from home construction to commercial buildings to industrial products.

Fibreboards constitute a subset of engineered wood. Types of fibreboards (in order of increasing density) include low-density fibreboards (LDF; known also as particle boards or chip boards), medium-density fibreboards (MDF), high-density fibreboards (HDF; known also as waferboards, flakeboards). In the context of this invention fibreboards with density of at most 500 kg/$m^3$ (preferably of at least 100 and at most 500 kg/$m^3$) are viewed as LDF. In the context of this invention fibreboards with density higher than 500 and at most 1000 kg/$m^3$ (preferably of at least 550 and at most 800 kg/$m^3$) are viewed as MDF. In the context of this invention fibreboards with density higher than 1000 kg/$m^3$ (preferably higher than 1000 and at most 1500, more preferably higher than 1000 and at most 1100 kg/$m^3$) are viewed as HDF. In principle, fibreboards can be formed using either a wet-forming or a dry-forming process. In a wet-forming process, water is used to distribute the fibers into a mat and then pressed into a board. In the dry process, fibers from the refiner go through a dryer and blow line where an adhesive is applied and then formed into a web which is pressed into a board. A typical fibreboard manufacture -at an industrial scale- begins with wood chipping: fresh or recycled wood material is cut and sorted to small pieces of similar size. Chips are washed to remove things such as dirt and sand. Metal scraps such as nails can be removed with a magnet placed over a conveyor belt on which the chips move forward. In the case of, for example MDF, chips are then steamed to soften them for defibration. Small amount of paraffin wax is added to the steamed chips and they are transformed into fluffy fibers in a defibrator and soon afterwards sprayed with urea-formaldehyde resins (UF) or phenol-formaldehyde resins (PF). Wax prevents fibers from clumping together during storage. Chips in the case of particle boards may also be sprayed with an additional resin before the next steps. Fibers or chips are arranged into a uniform 'mat' on a conveyor belt. This mat is pre-compressed and then hot-pressed (simultaneous application of heat and pressure). Hot-pressing binds the fibers or chips together. The board is then cooled, trimmed, sanded and maybe veneered or laminated. UF resins are dominantly used in the MDF industry.

In recent years, there is an increasing demand for objects such as sheets, tapes, sticks, strips, films, cloths, containers, boards, panels, beams, frames, planks, engineered wood [for example plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites], that contain vegetable fibers, especially vegetable fibers selected from the group consisting of natural cellulose fibers, natural lignocellulosic fibers, and mixtures thereof, more especially vegetable fibers selected from the group consisting of wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf (hibiscus cannabinus) fibers, straw fibers, grass fibers, leaf fibers, and mixtures thereof, most especially vegetable fibers selected from the group consisting of wood fibers, reed fibers, and mixtures thereof, for example vegetable fibers selected from the group consisting of wood fibers, and mixtures thereof, for example vegetable fibers selected from the group consisting of reed fibers, and mixtures thereof, wherein these objects have enhanced flexural properties i.e. modulus of rupture ($R_b$) and apparent modulus of elasticity (E).

In the context of this invention, the term 'flexural properties' represents and encompasses both the following material properties i) and ii): i) the modulus of rupture ($R_b$) and ii) the apparent modulus of elasticity (E). The flexural properties are determined by static bending tests carried out according to the ASTM D1037-12.

The flexural properties of objects such as those mentioned in this specification are critical for such objects and their consumer acceptance as well as their commercial success. The reason being enhanced flexural properties allow for more tolerance in mechanical and/or physical stresses that said objects are subject to during their lifetime of use including -but not limited to- their preparation, packaging, unpackaging, transport, storage and use. Objects of this sort

that suffer from poor flexural properties are usually fragile with little or no tolerance at all for mechanical and/or physical stresses. As a consequence the poor flexural properties severely limits their application and uses -if any-, and/or their lifetime -once in use- and consequently are typically rejected by the consumers.

This is a major drawback for objects of this sort. Unless, a technical solution that would enable the preparation of objects of this sort with enhanced flexural properties, said objects are unattractive for consumers and/or for a variety of -otherwise potential- industrial uses for them.

WO 2016/009062 A1 to Knauf Insulation Sprl. and Knauf Insulation Inc. provided for aqueous curable binder compositions comprising the starting materials required for forming a thermoset resin upon curing and a matrix polymer. The WO 2016/009062 A1 did not deal with enhancing the flexural properties of objects such as those mentioned in the specification, and it was also silent as to the use of hyperbranched polylysines and/or primary ammonium salt of hyperbranched polylysines, and also silent about an amount of protein lower than 0.30 wt.% of the composition, and a ratio of polyphenolic macromolecular compound to polylysine component of at most 0.40.

US 2007/0277928 A1 to AKZO Nobel Inc. provided for an adhesive system comprising at least 1 wt.% of protein [see paragraph 0014] and one or more polymers containing acetoacetoxy groups. This adhesive system was used to prepare objects such as fibreboards. The US 2007/0277928 did not deal with enhancing the flexural properties of objects such as those mentioned in the specification, and it was silent as to the use of hyperbranched polylysines and/or primary ammonium salt of hyperbranched polylysines, and also silent about an amount of protein lower than 0.30 wt.% of the composition, and a ratio of polyphenolic macromolecular compound to polylysine component of at most 0.40.

WO 2008/057390 A2 to Dow Reichhold Specialty Latex LLC provided for an engineered wood product, methods of making the product, composite materials including the engineered wood product, and articles of manufacture which include the engineered wood product and/or composite materials. According to the WO 2008/057390 A2 the engineered wood product must comprise both wood fibers and non-wood fibers selected from natural cellulosic fibers, synthetic polymer fibers and inorganic fibers. The term "natural cellulosic fibers" used in WO 2008/057390 A2 refers to what is known in the art of fibers as "synthetic cellulose fibers", "man-made cellulose fibers" or "manufactured cellulose fibers" or "artificial cellulose fibers" or "regenerated cellulose fibers" (as these where explained in this specification) and is clearly differentiated from the wood fibers which represent an example of vegetable fibers (as these were explained in this specification. The WO 2008/057390 A2 did not deal with enhancing the flexural properties of objects containing only vegetable fibers such as those mentioned in this specification, and it was also silent as to the use of hyperbranched polylysines and/or primary ammonium salt of hyperbranched polylysines, and also silent about an amount of protein lower than 0.30 wt.% of the composition, and a ratio of polyphenolic macromolecular compound to polylysine component of at most 0.40.

CN 110903786 A to the Institute of Chemical Industry of Forest Products of Chinese Academy of Forestry Sciences provided for an adhesive system for particle boards comprising five components: i) 30-150 parts by weight of soybean meal powder, ii) 100-1000 parts by weight of modified glue solution, iii) 1-10 parts by weight of preservative, iv) 1-20 parts by weight of paraffin milk, and v) 1-20 parts by weight of a pH regulator. According to the CN 110903786 A the adhesive system must comprise at least 2.8 wt.% of soybean meal powder (this is readily calculated when one counts the minimum amount of soybean meal powder that is 30 parts by weight and sums this amount up together with the rest of the four components, each one of them at their maximum amount; the thus minimum amount of soybean meal powder is calculated to be 2.8 parts by weight (=30/1080) or equally 2.80 wt.%. There are two types of soybean meal; one which has a protein content in the range of 47-49 wt.% that is known as high-protein soybean meal, and another one which has a protein content in the range of 43-44 wt.% that is known as conventional soybean meal. Although the CN 110903786 A did not disclose which soybean type meal was used, one may safely assume that the adhesive system disclosed in CN 110903786 A must comprise at least 1.20 wt.% of protein assuming a 43 wt.% protein content -the lowest of the two available types- for the soybean meal powder used in CN 110903786 A. This adhesive system was used to prepare particle boards. The CN 110903786 A was silent as to the use of hyperbranched polylysines and/or primary ammonium salt of hyperbranched polylysines, and also silent about an amount of protein lower than 0.30 wt.% of the composition, and a ratio of polyphenolic macromolecular compound to polylysine component of at most 0.40.

WO 2016/009054 A1 to Knauf Insulation Sprl. and Knauf Insulation Inc. provided for aqueous curable binder compositions comprising (i) a polyphenolic macromolecular compound which bears a multitude of phenol or polyhydroxybenzene radical such as catechol radicals (dihydroxybenzene), preferably lignosulfonate salts - such as calcium lignosulfonate, ammonium lignosulfonate, magnesium lignosulfonate and mixtures thereof-, condensed tannins, and mixtures thereof, and (ii) a polyamine functional compound comprising primary and/or secondary and/or tertiary and/or quaternary amine functional groups, and/or reaction product of (i) and (ii), wherein the ratio of polyphenolic macromolecular compound to polyamine functional compound ranged from 98:2 to 50:50, preferably from 98:2 to 70:30, more preferably from 95:5 to 80:20 wt.%. In other words, the ratio of polyphenolic macromolecular compound to polyamine functional compound ranged from 1 to 49, preferably from 2.33 to 49, more preferably from 4 to 47.5.This composition was used to bond an assembly of fibers of particles upon curing. The WO 2016/009054 A1 did not deal with enhancing the flexural properties of objects such as those mentioned in the specification, and it was silent as to the use of hyperbranched polylysines and/or primary ammonium salt of hyperbranched polylysines, and also silent about an amount of protein lower than 0.30 wt.% of the composition, and a ratio of polyphenolic macromolecular compound to polylysine component of at most 0.40.

US 8,846,842 B2 to BASF Actiengesellschaft provided for high-functionality, highly branched or hyperbranched polylysines and to processes for preparing them. The US 8,846,842 B2 did not deal with enhancing the flexural properties of objects such as those mentioned in the specification and it was silent as to compositions comprising hyperbranched polylysines and/or primary ammonium salt of hyperbranched polylysines and a fibrous component -let alone objects such as those mentioned in the specification, e.g. fibreboards- and also silent about an amount of protein lower than 0.30 wt.% of the composition, and a ratio of polyphenolic macromolecular compound to polylysine component of at most 0.40.

Therefore, there is the desire for objects such as those mentioned in this specification which have enhanced flexural properties [both modulus of rupture ($R_b$) and apparent modulus of elasticity (E)] over comparable state of the art objects.

However, the above desire still represents an unmet need since the solution to such a problem, is particularly challenging and complex.

It is therefore the goal of the invention to provide for a solution to the above-mentioned unmet need. In other words, it is the goal of the invention to provide for objects such as sheets, tapes, sticks, strips, films, cloths, containers, boards, panels, beams, frames, planks, engineered wood [for example plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites], that contain vegetable fibers, especially vegetable fibers selected from the group consisting of natural cellulose fibers, natural lignocellulosic fibers, and mixtures thereof, more especially vegetable fibers selected from the group consisting of wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf (hibiscus cannabinus) fibers, straw fibers, grass fibers, leaf fibers, and mixtures thereof, most especially vegetable fibers selected from the group consisting of wood fibers, reed fibers, and mixtures thereof, for example vegetable fibers selected from the group consisting of wood fibers, and mixtures thereof, for example vegetable fibers selected from the group consisting of reed fibers, and mixtures thereof, that have enhanced flexural properties [both modulus of rupture ($R_b$) and apparent modulus of elasticity (E)].

This goal was surprisingly achieved by the compositions as disclosed in the claims and the specification.

More particularly, it has surprisingly been found that when the compositions of the inventions were hot-pressed (simultaneous application of heat and pressure; 210 °C under a pressure of 9 $kg/cm^2$= 882.6 kPa= 9 $kg/cm^2$, for 5 min) to prepare an object such as a fibreboard [the term includes low-density fibreboard (LDF; known also as particle board or chip board), medium-density fibreboard (MDF), and high-density fibreboard (HDF; known also as waferboard, flakeboard)], that contained wood fibers (in the form of wood chips), the fibreboards had enhanced flexural properties [both modulus of rupture ($R_b$) and apparent modulus of elasticity (E)] over comparable state-of-the-art objects. The compositions of the invention may also have an array of further uses depending on the way and the type of compositions or processes that they may be used.

The compositions of the invention constitute a major technological advancement for a number of industries in connection with either the production and/or the commercialization of said objects, since the compositions of this invention provide for objects such as those mentioned above that are characterized by enhanced flexural properties [both modulus of rupture ($R_b$) and apparent modulus of elasticity (E)] over comparable objects of the state-of-the-art.

The invention is as set out in the claims. Many other variations and embodiments within the scope of the claims will be apparent to those skilled in the art.

In agreement with the invention and within the scope of the claims, there are provided compositions as disclosed in the claims and the specification (also mentioned herein as inventive compositions). The inventive compositions are particularly suitable for the preparation of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB); the inventive compositions are especially suitable for the preparation of fibreboards [the term includes low-density fibreboard (LDF; known also as particle board or chip board), medium-density fibreboard (MDF), and high-density fibreboard (HDF; known also as waferboard, flakeboard)], and oriented strand boards (OSB); the inventive compositions are more especially suitable for the preparation of fibreboards [the term includes low-density fibreboard (LDF; known also as particle board or chip board), medium-density fibreboard (MDF), and high-density fibreboard (HDF; known also as waferboard, flakeboard)].

In agreement with the invention and within the scope of the claims, there are provided objects such as sheets,

tapes, sticks, strips, films, cloths, containers, boards, panels, beams, frames, planks, engineered wood [for example plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites], that contain vegetable fibers, especially vegetable fibers selected from the group consisting of natural cellulose fibers, natural lignocellulosic fibers, and mixtures thereof, more especially vegetable fibers selected from the group consisting of wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf (hibiscus cannabinus) fibers, straw fibers, grass fibers, leaf fibers, and mixtures thereof, most especially vegetable fibers selected from the group consisting of wood fibers, reed fibers, and mixtures thereof, for example vegetable fibers selected from the group consisting of wood fibers, and mixtures thereof, for example vegetable fibers selected from the group consisting of reed fibers, and mixtures thereof, as disclosed in the claims and the specification (also mentioned herein as inventive objects). Thus, in agreement with the invention and within the scope of the claims, there are provided plywood, densified wood (including chemically densified wood), fibreboard[the term includes low-density fibreboard (LDF; known also as particle board or chip board), medium-density fibreboard (MDF), and high-density fibreboard (HDF; known also as waferboard, flakeboard)], oriented strand board (OSB), as disclosed in the claims and the specification (also mentioned herein as inventive objects).

In agreement with the invention and within the scope of the claims, there are provided processes for obtaining the inventive objects, as said processes are disclosed in the claims and the specification (also mentioned herein as inventive processes).

In agreement with the invention and within the scope of the claims, there are provided articles as disclosed in the claims and the specification (also mentioned herein as inventive articles).

In agreement with the invention and within the scope of the claims, there are provided uses of the inventive compositions, the inventive objects, the inventive articles as disclosed in the claims and the specification (also mentioned herein as inventive uses).

### 1. Explicit Preferments and Embodiments of the Invention

This section provides for explicit preferments and embodiments of the claimed invention; thus these explicit preferments and embodiments disclosed in this section are within the scope of the claimed invention. Any reference to components and constituents includes their preferments and preferred ranges as disclosed in the entire specification including the claims.

The invention provides for a composition comprising a constituent-A, which constituent-A consists of:

- a polylysine component, and
- a fibrous component,

wherein

the polylysine component is selected from the group consisting of polylysines-X and mixtures thereof, and wherein the polylysines-X are selected from the group consisting of hyperbranched polylysines and primary ammonium salt of hyperbranched polylysines, wherein each one of the polylysines-X has a degree of branching as determined by $^1$H-NMR spectroscopy disclosed in the specification, of at least 0.30 and at most 0.60, an apparent viscosity as determined by the Rheometry Method disclosed in the specification, of at least 400 and at most 8000 mPa.s, and a gel content as determined by the Gel-Content Method disclosed in the specification, of at most 4.0 %, and
the fibrous component consists of at least one fibrous element which fibrous element comprises vegetable fibers, and wherein the fibrous element is free of any fibers other than the vegetable fibers,
and wherein
the composition is free of any fibers other than the vegetable fibers of the fibrous component,
and wherein
the composition optionally comprises a constituent-B which is selected from the group consisting of proteins and mixtures thereof, and the constituent-B is different and distinct from any other component and constituent of the composition, in an amount of at most 0.30 wt.% of the composition,
and wherein
the composition optionally comprises a constituent-C which is selected from the group consisting of polyphenolic macromolecular compounds and mixtures thereof, wherein each of the polyphenolic macromolecular compounds

is a macromolecular compound which bears a multitude of phenol or polyhydroxybenzene radicals, and the constituent-C is different and distinct from any other component and constituent of the composition, in an amount such that the ratio of the total weight of the constituent-C divided by the total weight of the polylysine component is at most 0.40.

Preferably the composition is as disclosed in claim 1 or as in any combination derived from the disclosure in section 3 and the entire specification including the claims, wherein each one of the polylysines-X has a degree of branching as determined by $^1$H-NMR spectroscopy disclosed in the specification, of at least 0.30 and at most 0.55, preferably at least 0.30 and at most 0.50, more preferably at least 0.30 and at most 0.45, most preferably at least 0.30 and at most 0.40. The subject matter of this paragraph is mentioned in the specification as 'A1'.

Preferably the composition is as disclosed in claim 1 or in A1 or as in any combination derived from the disclosure in section 3 and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of halide anions, carboxylate anions and sulfonate anions. More preferably the composition is as disclosed in claim 1 or in A1 or as in any combination derived from the disclosure in section 3 and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of halide anions and carboxylate anions. More preferably the composition is as disclosed in claim 1 or in A1 or as in any combination derived from the disclosure in section 3 and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of halide anions. Even more preferably the composition is as disclosed in claim 1 or in A1 or as in any combination derived from the disclosure in section 3 and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of fluoride, chloride, bromide and iodide. Most preferably, the composition is as disclosed in claim 1 or in A1 or as in any combination derived from the disclosure in section 3 and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of chloride, bromide and iodide. Especially, the composition is as disclosed in claim 1 or in A1 or as in any combination derived from the disclosure in section 3 and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of chloride and bromide. More especially, the composition is as disclosed in claim 1 or in A1 or as in any combination derived from the disclosure in section 3 and the entire specification including the claims, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is chloride. The subject matter of this paragraph is mentioned in the specification as 'A2'.

Preferably the composition is as disclosed in claim 1 or in A1 or as in any combination derived from the disclosure in section 3 and the entire specification including the claims, wherein the polylysines-X are selected from the group consisting of hyperbranched polylysines. The subject matter of this paragraph is mentioned in the specification as 'A3'.

Preferably the composition is as disclosed in claim 1 or in any one of A1 to A3 or as in any combination derived from the disclosure in section 3 and the entire specification including the claims, wherein the composition optionally comprises a constituent-B in an amount of at most 0.20, more preferably at most 0.10, most preferably at most 0.05 wt.% of the composition. The subject matter of this paragraph is mentioned in the specification as 'A4'.

Preferably the composition is as disclosed in claim 1 or in any one of A1 to A3 or as in any combination derived from the disclosure in section 3 and the entire specification including the claims, wherein the composition is free of constituent-B. The subject matter of this paragraph is mentioned in the specification as 'A5'.

Preferably the composition is as disclosed in claim 1 or in any one of A1 to A5 or as in any combination derived from the disclosure in section 3 and the entire specification including the claims, wherein the composition optionally comprises a constituent-C which is selected from the group consisting of polyphenolic macromolecular compounds each of which is a macromolecular compound that bears a multitude of phenol or polyhydroxybenzene radicals, and mixtures

thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is a tannin, a lignosulfonate salt or a mixture thereof, and wherein the composition is free of any polyphenolic macromolecular compound other than a tannin, a lignosulfonate salt and any mixture of any combination of a tannin, and lignosulfonate salt. More preferably the composition is as disclosed in claim 1 or in any one of A1 to A5 or as in any combination derived from the disclosure in section 3 and the entire specification including the claims, wherein the composition optionally comprises a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is a condensed tannin, a lignosulfonate salt or a mixture thereof, and wherein the composition is free of any polyphenolic macromolecular compound other than a condensed tannin, a lignosulfonate salt and any mixture of any combination of a condensed tannin, and lignosulfonate salt. Even more preferably the composition is as disclosed in claim 1 or in A5 or as in any combination derived from the disclosure in section 3 and the entire specification including the claims, wherein the composition optionally comprises a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is a lignosulfonate salt or a mixture of lignosulfonate salts, and wherein the composition is free of any polyphenolic macromolecular compound other than a lignosulfonate salt and mixtures of lignosulfonate salts. More preferably the composition is as disclosed in claim 1 or in A5 or as in any combination derived from the disclosure in section 3 and the entire specification including the claims, wherein the composition optionally comprises a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is calcium lignosulfonate, ammonium lignosulfonate, magnesium lignosulfonate or a mixture thereof, and wherein the composition is free of any polyphenolic macromolecular compound other than calcium lignosulfonate, ammonium lignosulfonate, magnesium lignosulfonate and a mixture thereof. Especially, the composition is as disclosed in claim 1 or in A5 or as in any combination derived from the disclosure in section 3 and the entire specification including the claims, wherein the composition optionally comprises a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is magnesium lignosulfonate, and wherein the composition is free of any polyphenolic macromolecular compound other than magnesium lignosulfonate. The subject matter of this paragraph is mentioned in the specification as 'A6'.

Preferably the composition is as disclosed in claim 1 or in any one of A1 to A5 or as in any combination derived from the disclosure in section 3 and the entire specification including the claims, wherein the composition is free of constituent-C. The subject matter of this paragraph is mentioned in the specification as 'A7'.

Preferably the composition is as disclosed in claim 1 or in any one of A1 to A7 or as in any combination derived from the disclosure in section 3 and the entire specification including the claims, wherein each one of the polylysines-X has an apparent viscosity as determined by the Rheometry Method disclosed in the specification of at least 400 and at most 7000, for example at least 400 and at most 6000, for example at least 400 and at most 5000, for example at least 400 and at most 4000, for example at least 400 and at most 3000, for example at least 400 and at most 2500, for example at least 400 and at most 2000, for example at least 400 and at most 1800, for example at least 400 and at most 1600, for example at least 400 and at most 1550, for example at least 450 and at most 10000, for example at least 450 and at most 9000, for example at least 450 and at most 8000, for example at least 450 and at most 7000, for example at

least 450 and at most 6000, for example at least 450 and at most 5000, for example at least 450 and at most 4000, for example at least 450 and at most 3000, for example at least 450 and at most 2500, for example at least 450 and at most 2000, for example at least 450 and at most 1800, for example at least 450 and at most 1600, for example at least 450 and at most 1550 mPa.s. The subject matter of this paragraph is mentioned in the specification as 'A8'.

Preferably the composition is as disclosed in claim 1 or in any one of A1 to A7 or as in any combination derived from the disclosure in section 3 and the entire specification including the claims, wherein each one of the polylysines-X has an apparent viscosity of at least 400 and at most 2000 mPa.s, especially at least 400 and at most 1800 mPa.s, more especially at least 450 and at most 1550 mPa.s. The subject matter of this paragraph is mentioned in the specification as 'A9'.

Preferably the composition is as disclosed in claim 1 or in any one of A1 to A9 or as in any combination derived from the disclosure in section 3 and the entire specification including the claims, wherein each one of the polylysines-X has a gel content as determined by the Gel-Content Method disclosed in the specification, of at most 3.0 %, preferably at most 2.0 % more preferably at most 1.0, most preferably at most 0.5 %, especially at most 0.1 %, more especially at most 0.05 %, most especially each one of the polylysines-X has a gel content of 0.0 %. The subject matter of this paragraph is mentioned in the specification as 'A10'.

Preferably the composition is as disclosed in claim 1 or in any one of A1 to A10 or as in any combination derived from the disclosure in section 3 and the entire specification including the claims, wherein each one of the polylysines-X has an amine number (abbreviated as AN) as determined by the Titration Method disclosed in the specification that is higher than its acid value (abbreviated as AV) as determined by the Titration Method disclosed in the specification. The subject matter of this paragraph is mentioned in the specification as 'A 11'.

Preferably the composition is as disclosed in claim 1 or in any one of A1 to A11 or as in any combination derived from the disclosure in section 3 and the entire specification including the claims, wherein each one of the polylysines-X has a number average molecular weight (abbreviated as $M_n$) as determined by the Gel-Permeation Chromatography Method disclosed in the specification, of at least 1100 and at most 10000 Da, preferably at least 1500 and at most 8000 Da, more preferably at least 2000 at most 6000 Da. The subject matter of this paragraph is mentioned in the specification as 'A12'.

Preferably the composition is as disclosed in claim 1 or in any one of A1 to A12 or as in any combination derived from the disclosure in section 3 and the entire specification including the claims, wherein each one of the polylysines-X has weight average molecular weight (abbreviated as $M_w$) as determined by the Gel-Permeation Chromatography Method disclosed in the specification, of at least 3000 and at most 50000 Da, preferably at least 5000 and at most 40000 Da, more preferably at least 10000 and at most 30000 Da. The subject matter of this paragraph is mentioned in the specification as 'A13'.

Preferably the composition is as disclosed in claim 1 or in any one of A1 to A13 or as in any combination derived from the disclosure in section 3 and the entire specification including the claims, wherein each one of the polylysines-X has an amine number (abbreviated as AN) as determined by the Titration Method disclosed in the specification, of at least 200 and at most 700 mg KOH/g, preferably at least 250 and at most 600 mg KOH/g, more preferably at least 250 and at most 500 mg KOH/g, especially at least 300 and at most 400 mg KOH/g. The subject matter of this paragraph is mentioned in the specification as 'A 14'.

Preferably the composition is as disclosed in claim 1 or in any one of A1 to A14 or as in any combination derived from the disclosure in section 3 and the entire specification including the claims, wherein each one of the polylysines-X has an acid value (abbreviated as AV) as determined by the Titration Method disclosed in the specification, of at least 10 and at most 150 mg KOH/g, preferably at least 30 and at most 100, more preferably at least 40 and at most 90 mg KOH/g. The subject matter of this paragraph is mentioned in the specification as 'A15'.

Preferably the composition is as disclosed in claim 1 or in any one of A1 to A7 or as in any combination derived from the disclosure in section 3 and the entire specification including the claims, wherein each one of the polylysines-X has:

- a number average molecular weight (abbreviated as $M_n$) as determined by the Gel-Permeation Chromatography Method disclosed in the specification, of at least 1100 and at most 10000 Da, preferably at least 1500 and at most 8000 Da, more preferably at least 2000 at most 6000 Da,
- a weight average molecular weight (abbreviated as $M_w$) as determined by the Gel-Permeation Chromatography Method disclosed in the specification, of at least 3000 and at most 50000 Da, preferably at least 5000 and at most 40000 Da, more preferably at least 10000 and at most 30000 Da,
- a polydispersity (abbreviated as PD) calculated as the ratio of $M_w/M_n$, of at least 2 and at most 15, preferably at least 2 and at most 10, more preferably at least 3 and at most 8,
- an apparent viscosity as determined by the Rheometry Method disclosed in the specification, of at least 400 and at most 2500 mPa.s, especially at least 400 and at most 2000 mPa.s,
- an amine number (abbreviated as AN) as determined by the Titration Method disclosed in the specification, of at least 200 and at most 700 mg KOH/g, preferably at least 250 and at most 600 mg KOH/g, more preferably at least

250 and at most 500 mg KOH/g, especially at least 300 and at most 400 mg KOH/g,

- an acid value (abbreviated as AV) as determined by the Titration Method disclosed in the specification, of at least 10 and at most 150 mg KOH/g, preferably at least 30 and at most 100, more preferably at least 40 and at most 90 mg KOH/g, and
- a gel content as determined by the Gel-Content Method disclosed in the specification, of at most 2.0 %, preferably at most 1.0 % more preferably at most 0.5 %, most preferably at most 0.1 %, especially at most 0.05 %, more especially a gel content of 0.0 %. The subject matter of this paragraph is mentioned in the specification as 'A 16'.

Preferably the composition is as disclosed in claim 1 or in any one of A1 to A16 or as in any combination derived from the disclosure in section 3 and the entire specification including the claims, wherein the polylysine component is present in an amount of at least 0.1 and at most 90, preferably at least 0.1 and at most 80, more preferably at least 0.1 and at most 70, even more preferably at least 0.1 and at most 60, most preferably at least 0.1 and at most 50, especially at least 0.1 and at most 40, more especially at least 0.1 and at most 30, most especially at least 0.1 and at most 20, for example at least 0.1 and at most 18, for example at least 0.1 and at most 15, for examples at least 0.1 and at most 14, for example at least 0.1 and at most 13, for example at least 0.1 and at most 12, for example at least 0.1 and at most 11, for example at least 0.1 and at most 10, for example at least 1.0 and at most 90, for example at least 1.0 and at most 80, for example at least 1.0 and at most 70, for example at least 1.0 and at most 60, for example at least 1.0 and at most 50, for example at least 1.0 and at most 40, for example at least 1.0 and at most 30, for example at least 1.0 and at most 20, for example at least 1.0 and at most 18, for example at least 1.0 and at most 15, for examples at least 1.0 and at most 14, for example at least 1.0 and at most 13, for example at least 1.0 and at most 12, for example at least 1.0 and at most 11, for example at least 1.0 and at most 10, for example at least 3.0 and at most 90, for example at least 3.0 and at most 80, for example at least 3.0 and at most 70, for example at least 3.0 and at most 60, for example at least 3.0 and at most 50, for example at least 3.0 and at most 40, for example at least 3.0 and at most 30, for example at least 3.0 and at most 20, for example at least 3.0 and at most 18, for example at least 3.0 and at most 15, for examples at least 3.0 and at most 14, for example at least 3.0 and at most 13, for example at least 3.0 and at most 12, for example at least 3.0 and at most 11, for example at least 3.0 and at most 10, for example at least 4.0 and at most 90, for example at least 4.0 and at most 80, for example at least 4.0 and at most 70, for example at least 4.0 and at most 60, for example at least 4.0 and at most 50, for example at least 4.0 and at most 40, for example at least 4.0 and at most 30, for example at least 4.0 and at most 20, for example at least 4.0 and at most 18, for example at least 4.0 and at most 15, for examples at least 4.0 and at most 14, for example at least 4.0 and at most 13, for example at least 4.0 and at most 12, for example at least 4.0 and at most 11, for example at least 4.0 and at most 10, for example at least 4.8 and at most 90, for example at least 4.8 and at most 80, for example at least 4.8 and at most 70, for example at least 4.8 and at most 60, for example at least 4.8 and at most 50, for example at least 4.8 and at most 40, for example at least 4.8 and at most 30, for example at least 4.8 and at most 20, for example at least 4.8 and at most 18, for example at least 4.8 and at most 15, for examples at least 4.8 and at most 14, for example at least 4.8 and at most 13, for example at least 4.8 and at most 12, for example at least 4.8 and at most 11, for example at least 4.8 and at most 10, for example at least 5.2 and at most 90, for example at least 5.2 and at most 80, for example at least 5.2 and at most 70, for example at least 5.2 and at most 60, for example at least 5.2 and at most 50, for example at least 5.2 and at most 40, for example at least 5.2 and at most 30, for example at least 5.2 and at most 20, for example at least 5.2 and at most 18, for example at least 5.2 and at most 15, for examples at least 5.2 and at most 14, for example at least 5.2 and at most 13, for example at least 5.2 and at most 12, for example at least 5.2 and at most 11, for example at least 5.2 and at most 10, for example at least 5.5 and at most 90, for example at least 5.5 and at most 80, for example at least 5.5 and at most 70, for example at least 5.5 and at most 60, for example at least 5.5 and at most 50, for example at least 5.5 and at most 40, for example at least 5.5 and at most 30, for example at least 5.5 and at most 20, for example at least 5.5 and at most 18, for example at least 5.5 and at most 15, for examples at least 5.5 and at most 14, for example at least 5.5 and at most 13, for example at least 5.5 and at most 12, for example at least 5.5 and at most 11, for example at least 5.5 and at most 10 wt.% of the composition. The subject matter of this paragraph is mentioned in the specification as 'A17'.

Preferably the composition is as disclosed in claim 1 or in any one of A1 to A16 or as in any combination derived from the disclosure in section 3 and the entire specification including the claims, wherein the polylysine component is present in an amount of at least 4.8 and at most 20, preferably at least 4.8 and at most 15, more preferably at least 4.8 and at most 11, most preferably at least 5.2 and at most 20, especially at least 5.2 and at most 15, more especially at least 5.2 and at most 11, most especially at least 5.5 and at most 20, for example at least 5.5 and at most 15, for examples at least 5.5 and at most 11 wt.% of the composition. The subject matter of this paragraph is mentioned in the specification as 'A18'.

Preferably the composition is as disclosed in claim 1 or in any one of A1 to A18 or as in any combination derived from the disclosure in section 3 and the entire specification including the claims, wherein the composition is free of a constituent-D which constituted-D is selected from the group consisting of: i) monosaccharides in their aldose or ketose form, ii) oligosaccharides, iii) polysaccharides, iv) monomeric or polymeric compounds that yield one or more reducing

sugars in situ e.g. upon heating, and mixtures of i) to iv), and the constituent-D is different and distinct from any other component and constituent of the composition. The subject matter of this paragraph is mentioned in the specification as ’A19’.

Preferably the composition is as disclosed in claim 1 or in any one of A1 to A19 or as in any combination derived from the disclosure in section 3 and the entire specification including the claims, wherein the composition comprises a constituent-E which constituent-E is selected from the group consisting of peptides and mixtures thereof, and wherein the constituent-E is different and distinct from any other component and constituent of the composition, in an amount of at most 0.30 for example at most 0.20 for example at most 0.10 for example at most 0.05 wt.% of the composition. The subject matter of this paragraph is mentioned in the specification as ’A20’.

Preferably the composition is as disclosed in claim 1 or in any one of A1 to A20 or as in any combination derived from the disclosure in section 3 and the entire specification including the claims, wherein the composition is free of constituent-E. The subject matter of this paragraph is mentioned in the specification as ’A21’.

Preferably the composition is as disclosed in claim 1 or in any one of A1 to A21 or as in any combination derived from the disclosure in section 3 and the entire specification including the claims, wherein the composition is free of urea-formaldehyde resins. The subject matter of this paragraph is mentioned in the specification as ’A22’.

Preferably the composition is as disclosed in claim 1 or in any one of A1 to A21 or as in any combination derived from the disclosure in section 3 and the entire specification including the claims, wherein the composition is free of melamine-formaldehyde resins. The subject matter of this paragraph is mentioned in the specification as ’A23’.

Preferably the composition is as disclosed in claim 1 or in any one of A1 to A21 or as in any combination derived from the disclosure in section 3 and the entire specification including the claims, wherein the composition is free of isocyanates and polyisocyanates. The subject matter of this paragraph is mentioned in the specification as ’A24’.

Preferably the composition is as disclosed in claim 1 or in any one of A1 to A21 or as in any combination derived from the disclosure in section 3 and the entire specification including the claims, wherein the composition is free of urea-formaldehyde resins, and free of melamine-formaldehyde resins, and free of isocyanates, and free of polyisocyanates, and free of mixtures thereof. The subject matter of this paragraph is mentioned in the specification as ’A25’.

Preferably the composition is as disclosed in claim 1 or in any one of A1 to A25 or as in any combination derived from the disclosure in section 3 and the entire specification including the claims, wherein the composition comprises water in an amount as determined by the Water-Content Method disclosed in the specification, of at least 1 and at most 90, preferably at least 2 and at most 90, more preferably at least 3 and at most 90, even more preferably at least 5 and at most 90, for example at least 1 and at most 80, for example at least 2 and at most 80, for example at least 3 and at most 80, for example at least 5 and at most 80, for example at least 1 and at most 70, for example at least 2 and at most 70, for example at least 3 and at most 70, for example at least 5 and at most 70, for example at least 1 and at most 60, for example at least 2 and at most 60, for example at least 3 and at most 60, for example at least 5 and at most 60, for example at least 1 and at most 50, for example at least 2 and at most 50, for example at least 3 and at most 50, for example at least 5 and at most 50, for example at least 1 and at most 40, for example at least 2 and at most 40, for example at least 3 and at most 40, for example at least 5 and at most 40, for example at least 1 and at most 30, for example at least 2 and at most 30, for example at least 3 and at most 30, for example at least 5 and at most 30, for example at least 1 and at most 20, for example at least 2 and at most 20, for example at least 3 and at most 20, for example at least 5 and at most 20, for example at least 1 and at most 10, for example at least 2 and at most 10, for example at least 3 and at most 10, for example at least 5 and at most 10 wt.% of the composition. The subject matter of this paragraph is mentioned in the specification as ’A26’.

Preferably the composition is as disclosed in claim 1 or in any one of A1 to A26 or as in any combination derived from the disclosure in section 3 and the entire specification including the claims, wherein the composition comprises water and the aggregate amount of the constituent-A and water in the composition is at least 10, preferably at least 20, for example at least 30, for example at least 40, for example at least 50, for example at least 60, for example at least 70, for example at least 80, for example at least 90, for example at least 92, for example at least 95, for example at least 97 for example at least 98, for example at least 99 wt.% of the composition, for example the composition consists of the constituent-A and water, wherein the amount of water is determined by the Water-Content Method disclosed in the specification. The subject matter of this paragraph is mentioned in the specification as ’A27’.

Preferably the composition is as disclosed in claim 1 or in any one of A1 to A27 or as in any combination derived from the disclosure in section 3 and the entire specification including the claims, wherein the composition comprises an organic solvent in an amount of at most 50, preferably at most 40, more preferably at most 30, even more preferably at most 20, most preferably at most 10, especially at most 5, more especially at most 3 wt.% of the composition. The subject matter of this paragraph is mentioned in the specification as ’A28’.

Preferably the composition is as disclosed in claim 1 or in any one of A1 to A27 or as in any combination derived from the disclosure in section 3 and the entire specification including the claims, wherein the composition is free of organic solvent. The subject matter of this paragraph is mentioned in the specification as ’A29’.

Preferably the composition is as disclosed in claim 1 or in any one of A1 to A29 or as in any combination derived

from the disclosure in section 3 and the entire specification including the claims, wherein the fibrous component is present in an amount of at least 10 and at most 98, preferably at least 20 and at most 98, more preferably at least 30 and at most 98, most preferably at least 40 and at most 98, especially at least 50 and at most 98, more especially at least 60 and at most 98, even more especially at least 70 and at most 98, most especially at least 80 and at most 98, for example at least 85 and at most 98 wt.% of the composition. The subject matter of this paragraph is mentioned in the specification as ’A30’.

Preferably the composition is as disclosed in claim 1 or in any one of A1 to A30 or as in any combination derived from the disclosure in section 3 and the entire specification including the claims, wherein the fibrous element comprises vegetable fibers in an amount of at least 20, preferably at least 30, more preferably at least 40, for example at least 50, for example at least 60, for example at least 70, for example at least 80, for example at least 90, for example at least 95, for example at least 96, for example at least 97, for example at least 98, for example at least 99, for example at least 99.5 wt.% of the fibrous element, for example the fibrous element consists of vegetable fibers. The subject matter of this paragraph is mentioned in the specification as ’A31’.

Preferably the composition is as disclosed in claim 1 or in any one of A1 to A31 or as in any combination derived from the disclosure in section 3 and the entire specification including the claims, wherein the vegetable fibers are selected from the group consisting of natural cellulose fibers, natural lignocellulosic fibers, and mixtures thereof. The subject matter of this paragraph is mentioned in the specification as ’A32’.

Preferably the composition is as disclosed in claim 1 or in any one of A1 to A32 or as in any combination derived from the disclosure in section 3 and the entire specification including the claims, wherein the vegetable fibers are selected from the group consisting of wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf fibers, straw fibers, grass fibers, leaf fibers, and mixtures thereof. The subject matter of this paragraph is mentioned in the specification as ’A33’.

Preferably the composition is as disclosed in claim 1 or in any one of A1 to A32 or as in any combination derived from the disclosure in section 3 and the entire specification including the claims, wherein the vegetable fibers are selected from the group consisting of wood fibers, reed fibers, and mixtures thereof. The subject matter of this paragraph is mentioned in the specification as ’A34’.

Preferably the composition is as disclosed in claim 1 or in any one of A1 to A32 or as in any combination derived from the disclosure in section 3 and the entire specification including the claims, wherein the vegetable fibers are wood fibers. The subject matter of this paragraph is mentioned in the specification as ’A35’.

Preferably the composition is as disclosed in claim 1 or in any one of A1 to A35 or as in any combination derived from the disclosure in section 3 and the entire specification including the claims, wherein the fibrous element is selected from the group consisting of fibers, filaments, yarns, strips, strands, threads, staple fiber yarns, particles, chips, shavings, flakes, lamellae, pulp, and mixtures thereof; preferably the fibrous element is selected from the group consisting of fibers, filaments, yarns, threads, staple fiber yarns, particles, chips, shavings, flakes, pulp, and mixtures thereof; more preferably the fibrous element is a wood chip. The subject matter of this paragraph is mentioned in the specification as ’A36’.

Preferably the composition is as disclosed in claim 1 or in any one of A1 to A30 or as in any combination derived from the disclosure in section 3 and the entire specification including the claims, wherein the fibrous component consists of wood chips wherein the d50 which is the median value of the particle size distribution of the wood chips determined according to the ISO 17827-1 :2016, is at least 1 and at most 50, preferably at least 1 and at most 40, for example at least 1 and most 30, for example at least 1 and at most 20, for example at least 1 and at most 15, for example at least 1 and at most 10, for example at least 1 and at most 8 mm. The subject matter of this paragraph is mentioned in the specification as ’A37’.

Preferably the composition is as disclosed in claim 1 or in any one of A1 to A37 or as in any combination derived from the disclosure in section 3 and the entire specification including the claims, wherein the constituent-A is present in an amount of at least 1 and at most 100, preferably at least 5 and at most 100, more preferably at least 10 and at most 100, even more preferably at least 20 and at most 100, most preferably at least 30 and at most 100, for example at least 40 and at most 100, for example at least 50 and at most 100, for example at least 60 and at most 100, for example at least 70 and at most 100, for example at least 80 and at most 100, for example at least 90 and at most 100, for example at least 92 and at most 100, for example at least 95 and at most 100, for example at least 97 and at most 100, for example at least 98 and at most 100, for example at least 99 and at most 100 wt.% of the composition. The subject matter of this paragraph is mentioned in the specification as ’A38’.

In an embodiment of the invention, there is provided a process for obtaining an object wherein the process comprises the steps a to c:

a) providing a composition as disclosed in claim 1 or in any one of A1 to A38 or as in any combination derived from the disclosure in section 3 and the entire specification including the claims; and

b) subjecting the composition to heat and/or pressure and/or vacuum, preferably simultaneous heat and pressure,

to form an object, and
c) collecting the object.

The subject matter of this paragraph is mentioned in the specification as ’A39’.

Preferably the process for obtaining an object is as disclosed in A39 or as in any combination derived from the disclosure in section 5 and the entire specification including the claims, wherein the step b is as follows: b) subjecting the composition to heat -preferably at any temperature in the range of from an including 40 up to and including 300 °C, more preferably in the range of from an including 100 up to and including 280 °C, for example in the range of from an including 140 up to and including 260 °C, for example in the range of from an including 150 up to and including 250 °C, for example in the range of from an including 160 up to and including 220 °C, for example in the range of from an including 170 up to and including 220 °C- and/or pressure -preferably at any pressure in the range of from an including 120 up to and including $10^5$ kPa- and/or vacuum -preferably at any vacuum in the range of from an including $10^{-10}$ up to and including 90 kPa-, for a time enough -preferably for at least 1 sec and at most 60 min, more preferably at least 2 sec and at most 30 min, for example at least 3 sec and at most 20 min, for example at least 4 sec and at most 10 min, for example at least 5 sec and at most 8 min, for example at least 10 sec and at most 6 min, for example at least 10 sec and at most 5 min- to form an object; preferably subjecting the composition to simultaneous heat and pressure in any combination of temperature and pressure ranges disclosed just above for any time range disclosed just above to form an object. The subject matter of this paragraph is mentioned in the specification as ’A40’.

Preferably the process for obtaining an object is as disclosed in any one of A39 or A40 or as in any combination derived from the disclosure in section 5 and the entire specification including the claims, wherein the object is selected from the group consisting of sheets, tapes, sticks, strips, films, cloths, containers, boards, panels, beams, frames, planks, engineered wood [for example plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites]. More preferably the process for obtaining an object is as disclosed in any one of A39 or A40 or as in any combination derived from the disclosure in section 5 and the entire specification including the claims, wherein the object is selected from the group consisting of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites. Even more preferably the process for obtaining an object is as disclosed in any one of A39 or A40 or as in any combination derived from the disclosure in section 5 and the entire specification including the claims, wherein the object is selected from the group consisting of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB); Most preferably the process for obtaining an object is as disclosed in any one of A39 or A40 or as in any combination derived from the disclosure in section 5 and the entire specification including the claims, wherein the object is selected from the group consisting of fibreboard [the term includes low-density fibreboard (LDF; known also as particle board or chip board), medium-density fibreboard (MDF), and high-density fibreboard (HDF; known also as waferboard, flakeboard)], oriented strand board (OSB). Especially the process for obtaining an object is as disclosed in any one of A39 or A40 or as in any combination derived from the disclosure in section 5 and the entire specification including the claims, wherein the object is selected from the group consisting of a fiberboard [the term includes low-density fibreboard (LDF; known also as particle board or chip board), medium-density fibreboard (MDF), and high-density fibreboard (HDF; known also as waferboard, flakeboard)]. the process for obtaining an object is as disclosed in any one of A39 or A40 or as in any combination derived from the disclosure in section 5 and the entire specification including the claims, wherein the object is a low-density fibreboard (LDF; known also as particle board or chip board. For example the process for obtaining an object is as disclosed in any one of A39 or A40 or as in any combination derived from the disclosure in section 5 and the entire specification including the claims, wherein the object is a medium-density fibreboard (MDF). For example the process for obtaining an object is as disclosed in any one of A39 or A40 or as in any combination derived from the disclosure in section 5 and the entire specification including the claims, wherein the object is a high-density fibreboard (HDF; known also as waferboard, flakeboard)]. The subject matter of this paragraph is mentioned in the specification as ’A41’.

Preferably the process for obtaining an object is as disclosed in any one of A39 or A40 or as in any combination derived from the disclosure in section 5 and the entire specification including the claims, wherein the object is selected from the group consisting of sheets, tapes, sticks, strips, films, cloths, containers, boards, panels, beams, frames, planks,

engineered wood. The subject matter of this paragraph is mentioned in the specification as 'A42'.

Preferably the process for obtaining an object is as disclosed in any one of A39 or A40 or as in any combination derived from the disclosure in section 5 and the entire specification including the claims, wherein the object is engineered wood. The subject matter of this paragraph is mentioned in the specification as 'A43'.

Preferably the process for obtaining an object is as disclosed in any one of A39 or A40 or as in any combination derived from the disclosure in section 5 and the entire specification including the claims, wherein the object is a fibreboard [the term includes low-density fibreboard (LDF; known also as particle board or chip board), medium-density fibreboard (MDF), and high-density fibreboard (HDF; known also as waferboard, flakeboard)]. The subject matter of this paragraph is mentioned in the specification as 'A44'.

In an embodiment of the invention, there is provided an object obtained by a process as disclosed in any one of A39 to A44 or any combination derived from the disclosure in sections 1, 3, 4, 5, and the entire specification including the claims. The subject matter of this paragraph is mentioned in the specification as 'A45'.

Preferably the object as disclosed in A45 or as disclosed in any combination derived from the disclosure in sections 1, 3, 4, 5, and the entire specification including the claims, is selected from the group consisting of sheets, tapes, sticks, strips, films, cloths, containers, boards, panels, beams, frames, planks, engineered wood [for example plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites]. More preferably the object as disclosed in A45 or as disclosed in any combination derived from the disclosure in sections 1, 3, 4, 5, and the entire specification including the claims, is selected from the group consisting of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites. Even more preferably the object as disclosed in A45 or as disclosed in any combination derived from the disclosure in sections 1, 3, 4, 5, and the entire specification including the claims, is selected from the group consisting of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB). Most preferably the object as disclosed in A45 or as disclosed in any combination derived from the disclosure in sections 1, 3, 4, 5, and the entire specification including the claims, is selected from the group consisting of fibreboard [the term includes low-density fibreboard (LDF; known also as particle board or chip board), medium-density fibreboard (MDF), and high-density fibreboard (HDF; known also as waferboard, flakeboard)], oriented strand board (OSB). Especially the object as disclosed in A45 or as disclosed in any combination derived from the disclosure in sections 1, 3, 4, 5, and the entire specification including the claims, is a fiberboard [the term includes low-density fibreboard (LDF; known also as particle board or chip board), medium-density fibreboard (MDF), and high-density fibreboard (HDF; known also as waferboard, flakeboard)]. For example the object as disclosed in A45 or as disclosed in any combination derived from the disclosure in sections 1, 3, 4, 5, and the entire specification including the claims, is a low-density fibreboard (LDF; known also as particle board or chip board; for example the object is a medium-density fibreboard (MDF). For example the object as disclosed in A45 or as disclosed in any combination derived from the disclosure in sections 1, 3, 4, 5, and the entire specification including the claims, is a high-density fibreboard (HDF; known also as waferboard, flakeboard)]. The subject matter of this paragraph is mentioned in the specification as 'A46'.

Preferably the object as disclosed in A45 or as disclosed in any combination derived from the disclosure in sections 1, 3, 4, 5, and the entire specification including the claims, is selected from the group consisting of sheets, tapes, sticks, strips, films, cloths, containers, boards, panels, beams, frames, planks, engineered wood. The subject matter of this paragraph is mentioned in the specification as 'A47'.

Preferably the object as disclosed in A45 or as disclosed in any combination derived from the disclosure in sections 1, 3, 4, 5, and the entire specification including the claims, is engineered wood. The subject matter of this paragraph is mentioned in the specification as 'A48'.

Preferably the object as disclosed in A45 or as disclosed in any combination derived from the disclosure in sections 1, 3, 4, 5, and the entire specification including the claims, is a fibreboard. The subject matter of this paragraph is mentioned in the specification as 'A49'.

In an embodiment of the invention, there is provided an article comprising: a) a part which is solid at 23 °C and 1 atm; and one or both of b) and c), wherein b) is a composition as disclosed in claim 1 or in any one of A1 to A38 or as in any combination derived from the disclosure in section 3 and the entire specification including the claims, and c) is

an object (especially engineered wood, more especially fibreboard) as disclosed in any one of A45 to A49, or any combination derived from the disclosure in sections 1, 3, 4, 5, 6 and the entire specification including the claims. The subject matter of this paragraph is mentioned in the specification as 'A50'.

In an embodiment of the invention, there is provided use of any one or any combination of i) to iii):

i) a composition as disclosed in claim 1 or in any one of A1 to A38 or as in any combination derived from the disclosure in section 3 and the entire specification including the claims;
ii) an object as disclosed in any one of A45 to A49, or any combination derived from the disclosure in sections 1, 3, 4, 5, 6 and the entire specification including the claims;
iii) an article according as disclosed in A50, or any combination derived from the disclosure in sections 1, 3, 4, 5, 6 and the entire specification including the claims;

in absorbents, 3D-printing, automotive applications (including but not limited to car parts, agricultural machines, composite structures, ceramic structures), marine applications (including but not limited to ships, boats, parts for ships and boats), aerospace applications (including but not limited to planes, helicopters, composite structures, ceramic structures, parts for planes, helicopters), medical items (including but not limited to artificial joints, meshes, woven or non-woven sheets, tapes, ribbons, bands, cables, tube-like products for e.g. ligament replacement, composite structures, ceramic structures), defense applications (including but not limited to ballistic protection, body armour, ballistic vests, ballistic helmets, ballistic vehicle protection, composite structures, ceramic structures), sports/recreational applications (including but not limited to toys, fencing, skates, skateboarding, snowboarding, suspension lines on sport parachutes, paragliders, kites, kite lines for kite sports, climbing equipment, composite structures, ceramic structures), architectural applications (including but not limited to windows, doors, (pseudo-)walls, cable), bottling applications, household applications (including but not limited to household appliances, whitegoods, furniture, computer housings), machinery applications (including but not limited to can and bottle handling machine parts, moving parts on weaving machines, bearings, gears, composite structures, ceramic structures, computer housings), can applications, coil applications, energy related applications (including but not limited to generators for wind, tide or solar energy), and electricity related applications (including but not limited to cabinets for electrical wire or switch boards). The subject matter of this paragraph is mentioned in the specification as 'A51'.

Further preferments and embodiments of the invention and preferred features thereof are given in the claims.

Unless otherwise explicitly stated, any feature, element, component, embodiment, range and especially any preferred feature, preferred element, preferred embodiment, preferred range, preferred combination of ranges, preferments, and embodiments in connection with any piece of disclosure in any one of A1 to 51 disclosed in this section can be combined with each other and with any other feature, element, component, embodiment, range and especially any preferred feature, preferred element, preferred embodiment, preferred range, preferred combination of ranges, preferments, and embodiments of the invention as these are disclosed in the entire specification including the claims. All combinations of minimum and maximum values of the parameters disclosed in this section may be used to define the parameter ranges for various preferments and embodiments of the invention disclosed in this section. Unless otherwise explicitly stated, any feature, element, component, embodiment, range and especially any preferred feature, preferred element, preferred embodiment, preferred range, preferred combination of ranges, preferments, and embodiments of the invention as these are disclosed in this section, in the claims and in the entire specification can be combined with each other. For all upper and lower boundaries of any parameters given in this section, the boundary value is included in each range for each parameter. All combinations of minimum and maximum values of the parameters disclosed in this section may be used to define the parameter ranges for the various preferments and embodiments disclosed in this section.

## 2. Definitions

By the term 'lysine' is meant the α-amino acid having the following formula

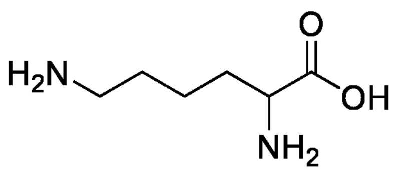

Any reference to 'lysine' in this specification refers to and encompasses both lysine's two enantiomeric forms, namely D- and L-lysine; 'L' and 'D' refer to the chirality at lysine's carbon atom which is directly linked to the carbon atom of the

carboxylic group.

The degree of branching (DB) of a polylysine is determined by $^1$H-NMR spectroscopy and calculated according to the equation 1:

$$DB = \frac{2D}{2D + L}$$

(equation 1)

wherein

D is equal to or higher than 0, L is equal to or higher than 0, and at least one of the D and L is higher than 0; and wherein

D is the integral of the $^1$H-NMR peaks corresponding to the methine proton (shorthand for the proton to the tertiary carbon; indicated in bold in Formulae D1a and D1b) of any number of the following group(s) shown in Formulae D1a and D1b that may be present in the polylysine (if no such methine protons are present in the polylysine, the D is equal to zero):

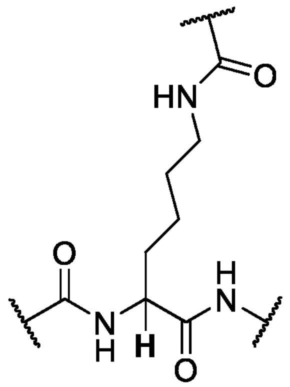

Formula D1a

and

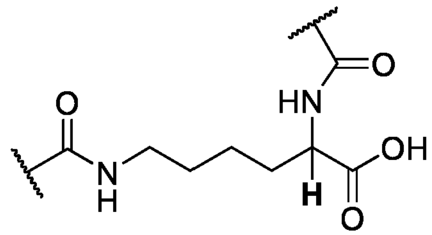

Formula D1b

L represents the sum of $L_\alpha$ and $L_\varepsilon$, wherein

$L_\alpha$ is the integral of the $^1$H-NMR peaks corresponding to the methine proton (shorthand for the proton to the tertiary carbon; indicated in bold in Formulae L1a and L1b) of any number of any one of the following group(s) shown in Formulae L1a and L1b that may be present in the polylysine (if no such methine protons are present in the polylysine, the $L_\alpha$ is equal to zero):

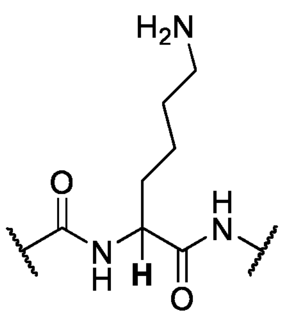

Formula L1a

and

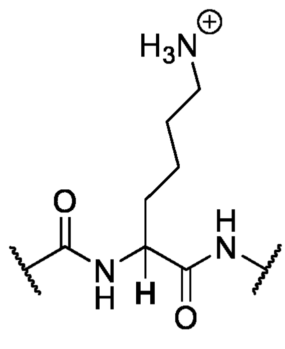

Formula L1b

and

$L_\varepsilon$ is the integral of the $^1$H-NMR peaks corresponding to the methine proton (shorthand for the proton to the tertiary carbon indicated in bold in Formulae L2a and L2b) of any number of any one of the following group(s) shown in

Formulae L2a and L2b that may be present in the polylysine (if no such methine protons are present in the polylysine, the $L_\varepsilon$ is equal to zero):

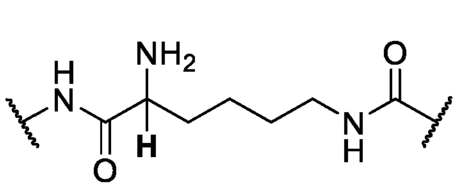 and 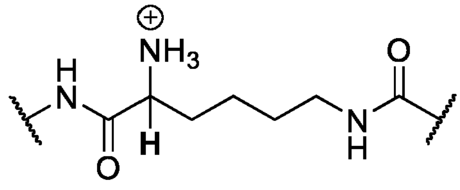

Formula L2a Formula L2b

The DB ranges from and including 0 up to and including 1 (or equally the DB is at least 0 and at most 1).

By 'polylysine' is meant herein a polymer consisting of (reacted) lysine molecules which are linked by peptide bonds. The polylysine may be linear, branched or dendrimeric. Obviously, the degree of branching (DB) of a polylysine ranges from and including 0 up to and including 1 (or equally a polylysine has a DB of at least 0 and at most 1). Examples of polylysines include α-polylysines, ε-polylysines, hyperbranched polylysines, dendrimeric polylysines.

By 'primary ammonium salt of polylysine' is meant in the specification a polylysine (as the latter is defined in the specification) which contains in its structure at least one primary ammonium cation ($-NH_3^+$) which cation is countered by an anion, and wherein the primary ammonium cation is the cationized form of an amino group of the polylysine.

By 'α-polylysine' is meant in the specification a polymer which has the following formula A:

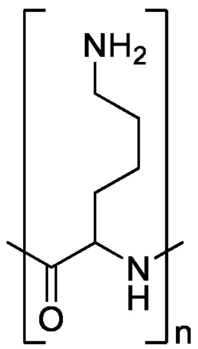

Formula A

wherein n is an integer equal or higher than 2, and a degree of branching (DB) equal to 0.

By 'primary ammonium salt of α-polylysine' is meant in the specification an α-polylysine (as the latter is defined in the specification) which contains in its structure at least one primary ammonium cation ($-NH_3^+$) which cation is countered by an anion, and wherein the primary ammonium cation is the cationized form of an amino group of the α-polylysine, and wherein the primary ammonium salt of α-polylysine has a degree of branching (DB) equal to 0.

By 'ε -polylysine' is meant in the specification a polymer which has the following formula B:

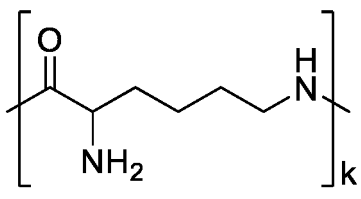

Formula B

wherein k is an integer equal or higher than 2, and a degree of branching (DB) equal to 0.

By 'primary ammonium salt of ε-polylysine' is meant in the specification an ε-polylysine (as the latter is defined in the specification) which contains in its structure at least one primary ammonium cation ($-NH_3^+$) which cation is countered by an anion, and wherein the primary ammonium cation is the cationized form of an amino group of the ε-polylysine, and wherein the primary ammonium salt of ε-polylysine has a degree of branching (DB) equal to 0.

By 'hyperbranched polylysine' is meant in the specification a polylysine which has a degree of branching (DB)

higher than 0 and at most 0.99.

By 'primary ammonium salt of hyperbranched polylysine' is meant in the specification a hyperbranched polylysine (as the latter is defined in the specification) which contains in its structure at least one primary ammonium cation ($-NH_3^+$) which cation is countered by an anion, and wherein the primary ammonium cation is the cationized form of an amino group of the hyperbranched polylysine, and wherein the primary ammonium salt of hyperbranched polylysine has a degree of branching (DB) higher than 0 and at most 0.99.

By 'dendrimeric polylysine' is meant in the specification a polylysine that has a degree of branching (DB) higher than 0.99 and at most 1.

By 'primary ammonium salt of dendrimeric polylysine' is meant in the specification a dendrimeric polylysine (as the latter is defined in the specification) which contains in its structure at least one primary ammonium cation ($-NH_3^+$) which cation is countered by an anion, and wherein the primary ammonium cation is the cationized form of an amino group of the dendrimeric polylysine and wherein the primary ammonium salt of dendrimeric polylysine has a degree of branching (DB) higher than 0.99 and at most 1.

By 'peptide' is meant in the specification a polymeric compound other than the polylysines-X (and obviously other than the polylysine component), wherein said polymeric compound consists of one chain which has at least 2 and at most 50 amino acids linked by peptide bonds.

By 'protein' is meant in the specification a polymeric compound other than the polylysines-X (and obviously other than the polylysine component), wherein said polymeric compound consists of at least one chain which has at least 51 amino acids linked by peptide bonds.

By 'gel content' (referring to a polylysine) is meant in the specification the fraction of a polylysine which is insoluble upon storing the polylysine in water at room temperature (23 °C) for 24 hours. The gel content is determined as described in the Examples. A polylysine with a gel content higher than 20 % is characterized as a 'crosslinked polylysine', whilst a polylysine with a gel content of at most 20 % is characterized as a 'non-crosslinked polylysine'. The gel content is determined by the Gel-Content Method described in the Examples.

By the term 'flexural properties' (referring to an object) is meant both the following material properties i) and ii): i) the modulus of rupture ($R_b$) and ii) the apparent modulus of elasticity (E). The flexural properties are determined by the Static Bending Method as described in the Examples.

The term 'engineered wood' (also known as mass timber, composite wood, man-made wood, or manufactured board) includes a range of derivative wood products which are manufactured by binding or fixing together the various wood elements (e.g. fibers, filaments, yarns, strips, strands, threads, staple fiber yarns, particles, chips (e.g. wood chips, sawdust), shavings (e.g. sawmill shavings), flakes, lamellae, pulp (e.g. wood pulp), and mixtures thereof), via various methods of fixation to form effectively a composite material. Exemplary types of engineered wood include but are not limited to plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites.

The term 'fibreboard' as used in the specification encompasses low-density fibreboard (LDF; known also as particle board or chip board), and medium-density fibreboard (MDF), and high-density fibreboard (HDF; known also as waferboard, flakeboard)].

By the term 'wood chips' is meant in the specification chipped woody biomass in the form of pieces with a defined particle size produced by mechanical treatment with sharp tools such as knives (ISO 16559-2014; §4.226). The particle size distribution of the wood chips is determined by oscillating screen method using sieves with apertures of 3.15 mm and above according to the ISO 17827-1:2016. According to this standard (ISO 17827-1:2016) the median value of the particle size distribution (d50) is reported and is defined as the calculated particle size of a sample where 50 % of the particle mass is below and 50 % is above. Graphically the median value is established by the intersection of the cumulative distribution curve with the 50 % line (X axis: particle/hole size (mm) and Y-axis: accumulated % of weight (%)].

By 'room temperature' is meant herein 23t 0.5 °C.

By 'atmospheric pressure' is meant in the specification pressure of 1 atm (1 atm= 101325 Pa).

By 'standard conditions' is meant in the specification room temperature and atmospheric pressure, collectively.

By 'lower than' is meant in the specification that the relevant maximum boundary value is not included in the range.

By 'higher than' is meant in the specification that the relevant minimum boundary value is not included in the range.

By 'rpm' is meant revolutions per minute.

The decimal separator in numbers (also known as the radix character) is indicated with a period ('.').

All combinations of minimum and maximum values of the parameters disclosed in the specification may be used to define the parameter ranges for various preferments or embodiments of the invention.

Unless otherwise explicitly stated, any feature, element, component, embodiment, range and especially any preferred feature, preferred element, preferred embodiment, preferred range, preferred combination of ranges, preferments, and embodiments of the invention as these are disclosed in the entire specification including the claims can be combined with each other.

For all upper and lower boundaries of any parameters given herein, the boundary value is included in each range for each parameter. All combinations of minimum and maximum values of the parameters described herein may be used to define the parameter ranges for various embodiments and preferences of the invention.

It will be understood that the total sum of any quantities expressed herein as percentages cannot (allowing for rounding errors) exceed 100 wt.% of the composition. For example the sum of all components of which the composition of the invention (or part(s) thereof) comprises may, when expressed as a weight (or other) percentage of the composition (or the same part(s) thereof), total 100 wt.% allowing for rounding errors. However where a list of components is non-exhaustive the sum of the percentage for each of such components may be less than 100 wt.% to allow a certain percentage for additional amount(s) of any additional component(s) that may not be explicitly described herein.

### 3. The compositions of the invention (inventive compositions)

The inventive compositions are as disclosed in claim 1, or as in any one of A1 to A38, or as in any combination derived from the disclosure in sections 1, 3 and the entire specification including the claims. The terms 'compositions of the invention' (or alternatively 'inventive compositions') as used in the specification includes any and all of its preferments, combinations of its features and ranges as well as combinations of any and all of its preferments with any and all of the combinations of its features and ranges. Thus, any and all of the inventive compositions disclosed in sections 1, 3 -and its subsections- includes any and all of their preferments, combinations of their features and ranges as well as combinations of any and all of their preferments with any and all of the combinations of their features and ranges, are collectively referred to -in the entire specification including the claims- as the inventive compositions (or equally the compositions of the invention).

The inventive compositions optionally comprise a constituent-B which is selected from the group consisting of proteins and mixtures thereof, and the constituent-B is different and distinct from any other component and constituent of the composition, in an amount of at most 0.30, more preferably at most 0.20, even more preferably at most 0.10 especially at most 0.05 wt.% of the composition, more especially the inventive compositions are free of constituent-B.

The inventive compositions optionally comprise a constituent-C which is selected from the group consisting of polyphenolic macromolecular compounds and mixtures thereof, wherein each of the polyphenolic macromolecular compounds is a macromolecular compound which bears a multitude of phenol or polyhydroxybenzene radicals, and the constituent-C is different and distinct from any other component and constituent of the composition, in an amount such that the ratio of the total weight of the constituent-C divided by the total weight of the polylysine component is at most 0.40, preferably at most 0.3, more preferably at most 0.2, even more preferably at most 0.15, especially at most 0.13. A phenol radical is a radical in which the benzene ring has one hydroxyl group and no other substituent. Polyhydroxybenzene radicals are organic radicals in which the benzene ring has at least two and at most five hydroxyl groups and no other substituent. Examples of polyhydroxybenzene radicals are 1,2-dihydroxybenzene radicals (also known as catechol radicals), 1,3-dihydroxybenzene radicals and 1,4-dihydroxybenze radicals. Exemplary polyphenolic macromolecular compounds include but are not limited to phenolic resins (e.g. phenol-formaldehyde resins, novolak resins), lignosulfonate salts, tannins. Tannins are classified into two major groups, namely hydrolysable tannins and non-hydrolysable tannins (the latter also known as condensed tannins or proanthocyanidins; the terms condensed tannins, proanthocyanidins and non-hydrolysable tannins are used in this specification interchangeably). The term tannins as used in this specification includes both hydrolysable tannins and condensed tannins. Exemplary lignosulfonate salts include but are not limited to calcium lignosulfonate, sodium lignosulfonate, ammonium lignosulfonate, magnesium lignosulfonate. Calcium lignosulfonate, sodium lignosulfonate, ammonium lignosulfonate, magnesium lignosulfonate are especially preferred and even more preferred is magnesium lignosulfonate. Preferably the inventive compositions optionally comprise a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is a tannin, a lignosulfonate salt or a mixture thereof, and wherein the composition is free of any polyphenolic macromolecular compound other than a tannin, a lignosulfonate salt and any mixture of any combination of a tannin, and lignosulfonate salt. More preferably the inventive compositions optionally comprise a constituent-C which is selected from the group

consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is a condensed tannin, a lignosulfonate salt or a mixture thereof, and wherein the composition is free of any polyphenolic macromolecular compound other than a condensed tannin, a lignosulfonate salt and any mixture of any combination of a condensed tannin, and lignosulfonate salt. Even more preferably the inventive compositions optionally comprise a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is a lignosulfonate salt or a mixture of lignosulfonate salts, and wherein the composition is free of any polyphenolic macromolecular compound other than a lignosulfonate salt and mixtures of lignosulfonate salts. Most preferably the inventive compositions optionally comprise a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is calcium lignosulfonate, ammonium lignosulfonate, magnesium lignosulfonate or a mixture thereof, and wherein the composition is free of any polyphenolic macromolecular compound other than calcium lignosulfonate, ammonium lignosulfonate, magnesium lignosulfonate and a mixture thereof. Especially the inventive compositions optionally comprise a constituent-C which is selected from the group consisting of polyphenolic macromolecular compounds each of which is a macromolecular compound that bears a multitude of phenol or polyhydroxybenzene radicals, and mixtures thereof, in an amount such that the ratio of the total weight of the constituent-C divided by the total weight of the polylysine component is at most 0.40, preferably at most 0.30, more preferably at most 0.25, even more preferably at most 0.20, most preferably at most 0.15, especially at most 0.14, more especially at most 0.13, and wherein the constituent-C is different and distinct from any other component and constituent of the composition, and wherein the constituent-C is magnesium lignosulfonate, and wherein the composition is free of any polyphenolic macromolecular compound other than magnesium lignosulfonate. More especially the inventive compositions are free of constituent-C because this results in further enhancement of the flexural properties.

The inventive compositions may comprise a constituent-D which is selected from the group consisting of: i) monosaccharides in their aldose or ketose form, ii) oligosaccharides, iii) polysaccharides, iv) monomeric or polymeric compounds that yield one or more reducing sugars in situ, e.g. upon heating, and mixtures of i) to iv), and the constituent-D is different and distinct from any other component and constituent of the composition. A reducing sugar is any monosaccharide, oligosaccharide or polysaccharide that is capable of acting as a reducing agent because it has at least one free aldehyde group or a free ketone group. All monosaccharides are reducing sugars. A non-reducing sugar is an oligosaccharide or a polysaccharide that is not capable of acting as a reducing agent (e.g. sucrose, trehalose). Exemplary monosaccharides include but are not limited to galactose, glucose, fructose, ribose, xylose, glyceraldehyde. Exemplary oligosaccharides include but are not limited to lactose, maltose, gentiobiose, cellobiose and melibiose. Exemplary polysaccharides include but are not limited to starch, glycogen. Examples of polymeric compounds that yield one or more reducing sugars in situ are hydrolysates (polymeric compounds that derive upon hydrolysis) of a polysaccharide such as starch. Preferably, the inventive compositions are free of constituent-D.

The inventive compositions may comprise a constituent-E which is selected from the group consisting of peptides and mixtures thereof and wherein the constituent-E is different and distinct from any other component and constituent of the composition. Preferably, the inventive compositions comprise a constituent-E in an amount of at most 0.30, preferably at most 0.20, more preferably at most 0.10, especially at most 0.05 wt.% of the composition; more especially the inventive compositions are free of constituent-E.

Preferably the inventive compositions are free of urea-formaldehyde resins. Preferably the inventive compositions are free of melamine-formaldehyde resins. Preferably the inventive compositions are free of isocyanates and polyisocyanates. Preferably the inventive compositions are free of urea-formaldehyde resins, and free of melamine-formaldehyde resins, and free of isocyanates, and free of polyisocyanates, and free of mixtures thereof.

The inventive compositions may comprise pigments, fillers, additives such as degassing agents, smoothness enhancing agents, appearance enhancing agents, (light) stabilizers.

**3a The polylysine component**

The polylysine component is as disclosed in claim 1, or as in any one of A1 to A38, or as in any combination derived from the disclosure in sections 1, 3 and the entire specification including the claims.

The polylysine component is selected from the group consisting of polylysines-X and mixtures thereof, and wherein the polylysines-X are selected from the group consisting of hyperbranched polylysines and primary ammonium salt of hyperbranched polylysines, wherein each one of the polylysines-X has a degree of branching as determined by $^1$H-NMR spectroscopy in the specification, of at least 0.30 and at most 0.60, preferably at least 0.30 and at most 0.60, more preferably at least 0.30 and at most 0.55, even more preferably at least 0.30 and at most 0.50, most preferably at least 0.30 and at most 0.45, especially at least 0.30 and at most 0.40, an apparent viscosity as determined by the Rheometry Method disclosed in the specification, of at least 400 and at most 8000, for example at least 400 and at most 7000, for example at least 400 and at most 6000, for example at least 400 and at most 5000, for example at least 400 and at most 4000, for example at least 400 and at most 3000, for example at least 400 and at most 2500, for example at least 400 and at most 2000, for example at least 400 and at most 1800, for example at least 400 and at most 1600, for example at least 400 and at most 1550, for example at least 450 and at most 10000, for example at least 450 and at most 9000, for example at least 450 and at most 8000, for example at least 450 and at most 7000, for example at least 450 and at most 6000, for example at least 450 and at most 5000, for example at least 450 and at most 4000, for example at least 450 and at most 3000, for example at least 450 and at most 2500, for example at least 450 and at most 2000, for example at least 450 and at most 1800, for example at least 450 and at most 1600, for example at least 450 and at most 1550 mPa.s, and a gel content as determined by the Gel-Content Method disclosed in the specification of at most 4.0, preferably at most 3.0 %, more preferably at most 2.0 %, even more preferably at most 1.0, most preferably at most 0.5 %, especially at most 0.1 %, more especially at most 0.05 %, most especially each one of the polylysines-X has a gel content of 0.0 %.

For illustration, Figure 1 depicts a hyperbranched polylysine which has a DB of 0.4 and a theoretical (calculated) molecular weight of 3350.6 Da. Figure 2 depicts a primary ammonium salt of hyperbranched polylysine wherein the anion that counters some of the primary ammonium cations ($-NH_3^+$) present in the structure of the primary ammonium salt of hyperbranched polylysines is chloride, and wherein the primary ammonium salt of hyperbranched polylysine of Figure 2 has a DB of 0.4 and a theoretical (calculated) molecular weight of 3569.3 Da.

Lysine (in either of its two enantiomeric forms, namely D- and L-lysine; 'L' and 'D' refer to the chirality at lysine's central carbon atom) which is the precursor amino acid, contains two amino groups; one at the $\alpha$-carbon and one at the $\varepsilon$-carbon. Either of these two amino groups can be the location of polymerization. In principle polylysines are formed from lysine or lysine salt [L-lysine, D-lysine, or any mixture thereof of L-lysine, e.g. a racemic mixture; or L-lysine salt, D-lysine salt or any mixture thereof e.g. a racemic mixture) in a polycondensation reaction in which water is released when an amino group of one lysine molecule and a carboxyl group of another lysine molecule react with each other to form an amide bond under production of water. The removal of water from the reaction mixture favours the polylysine formation.

Hyperbranched polylysines may be prepared via various processes. In principle the processes for preparing hyperbranched polylysines may be categorized in four major categories: i) processes based on the ring opening addition polymerization of e-protected L-lysine-N-carboxyanhydrides (NCAs) with a nucleophilic starter, ii) processes where derivatives of L-lysine*xHCl that are activated on the carboxyl group, are used, iii) processes involving the direct thermal addition polymerization of L-lysines, and iv) processes where in the presence of at least one catalyst selected from the group consisting of tertiary amines, basic alkali metal salts, alkaline earth metal salts, quaternary ammonium salts, alkoxides, alkanoates, chelates, organometallic compounds of metal groups IIIA to VIIIA or IB to VB in the Periodic Table of Elements, a salt of lysine with at least one acid is involved. The following paragraphs in this section provide for some examples of processes for preparing hyperbranched polylysines e.g. hyperbranched polylysines reading on the claimed invention.

Hyperbranched polylysines can be prepared by what is called the $AB_2$ route. An $AB_2$ molecule is a term used to refer to a trifunctional monomer containing one reactive group A and two reactive groups B; Where these groups A and B are reactive with one another, hyperbranched polymers can be produced by intermolecular reaction. Lysine is an example of such a trifunctional monomer where the reactive group A is the carboxyl group and each of the two reactive groups B is the amino group of the lysine and where these A and B groups in the lysine are reactive with one another; thus, an $AB_2$ polymerization route of lysine leads to hyperbranched polylysines.

Hyperbranched polylysines can also be prepared as follows: a reactor, e.g. a glass-reactor equipped with a distillation set-up is charged with L-lysine in water (50 wt.%). Upon the completion of the charge of the reactor with L-lysine in water (50 wt.%), the reactor is slowly (over 2- 8 hours) heated up to 120-190 °C (the slow increase in temperature is essential to avoid precipitation of unreacted L-lysine in the reactor, which can occur if too much water has distilled off before sufficient reaction conversion). When the desired reaction temperature has been reached, the reaction then proceeds for 2-30 hours at the desired temperature. Optionally, L-lysine in water (50 wt.%) can be added to the reactor

as water is being distilled off, in order to maintain the reactor's filling at a certain level. The reaction is monitored by taking samples over regular time periods, diluting the samples to 60 wt.% in water, and measuring the apparent viscosity. When the apparent viscosity of these samples is at the desired viscosity, the reaction mixture is discharged. If necessary, water can be added to the reaction mixture prior to discharging in order to yield a product with the desired solids content and apparent viscosity. The reactor that may be used in this process can be a high-pressure reactor. If a high-pressure reactor is used in this process, then said high-pressure reactor, equipped with a distillation set-up which distillation set-up is connected to the reactor via a pressure release valve, is charged with L-lysine in water (50 wt.%). Upon charging the high-pressure reactor with L-lysine in water (50 wt.%), the pressure in the high-pressure reactor starts to build up while the pressure release valve is closed off and the reactor is heated up to 120-190 °C. The pressure in the reactor is preferably maintained between 1-6 bar (1 bar= 100000 Pa) during the reaction; this preferred pressure range is also maintained during the reaction when the pressure release valve is being carefully and periodically opened and closed to allow for the distillation of water and some pressure release. When the desired reaction temperature has been reached, the reaction then proceeds for 2-30 hours at the desired temperature. Optionally, L-lysine in water (50 wt.%) can be added to the reactor as water is being distilled off, in order to maintain the reactor's filling at a certain level. The reaction is monitored by taking samples over regular time periods, diluting the samples to 60wt.% in water, and measuring the apparent viscosity. When the apparent viscosity of these samples is at the desired viscosity, the reaction mixture is discharged. If necessary, water can be added to the reaction mixture prior to discharging in order to yield a product with the desired solids content and apparent viscosity. The preparation of hyperbranched polylysines in agreement with the invention shown in the Examples offer examples of the processes described above in this paragraph.

Another way for preparing hyperbranched polylysines, uses L-lysine hydrochloride as starting material. The polymerisation of L-lysine hydrochloride was performed as follows: L-lysine hydrochloride (550 g, 3 mol) and NaOH (120 g, 3 mol) are added to a 1-L glass reactor with a distillation set-up. This reactor is heated to 120-190 °C and stirred for 2 to 30 hours. In order to follow the reaction, samples are taken every few hours, dissolved in water to a 60 wt.% solids content, and the apparent viscosity measured. To discharge, water (the amount added is calculated so the reaction mixture will have a resultant solid content of 70-80 wt.%) is added dropwise to the reactor and as water is added the temperature is lowered to 90 °C. The resultant reaction mixture in water (solid content 70-80 wt.%) is then discharged at 90 °C.

Another way for preparing hyperbranched polylysines, uses L-lysine hydrochloride and L-lysine as starting materials. According to this L-lysine in water (50 wt.%) (409.4 g, 1.4 mol), L-lysine hydrochloride (255.7 g, 1.4 mol), and NaOH (55.8 g,1.4 mol) were added to a 1-L glass reactor. This reactor is heated to 120-190 °C and stirred for 2 to 30 hours. In order to follow the reaction, samples are taken every few hours, dissolved in water to a 60 wt.% solids content, and the apparent viscosity measured. To discharge, water (the amount added is calculated so the reaction mixture will have a resultant solid content of 70-80 wt.%) is added dropwise to the reactor and as water is added the temperature is lowered to 90 °C. The resultant reaction mixtures in water (solid content 70-80 wt.%) is then discharged at 90 °C.

A yet another process for preparing hyperbranched polylysines is based on the ring-opening addition polymerization of ε-protected L-lysine-N-carboxyanhydrides (NCAs) with a nucleophilic starter. Examples of this process were disclosed by Klok et al., in WO 2003/064452 and in Macromolecules 2002, 35, 8718-8723 and by Rodriguez-Hernandez et al. in Biomacromolecules 2003, 4, 249-258. According to the latter, a mixture of $N^{e}$-trifluoroacetyl-L-lysine-NCA (TFA-Lys-NCA) and Z-lysine-NCA were subjected to ring-opening polymerization with an aliphatic amine. In a separate coupling step $N^{\alpha}$,$N^{\varepsilon}$-di(9-fluorenyl-methoxycarbonyl)-L-lysine ($N^{\alpha}$,$N^{\varepsilon}$-diFmoc Lys) was introduced as a branching point. Deprotection with piperidine in dimethyl formamide (DMF) gave two new amine groups, which allowed ring-opening polymerization of TFA-Lys-NCA and Z-Lys-NCA. These reaction cycles were repeated a number of times. Structurally similar hyperbranched block copolymers have also been described by Birchall et al. in Chem. Commun. 1998, 1335-1336. a-Amino acid NCAs were subjected to ring-opening polymerization with an aliphatic amine. N,N'-Di(benzyloxycarbonyl)-L-lysine p-nitrophenyl ester was introduced as a branching point, and after deprotection of $H_2$/Pd/C had two free amine groups for the further ring opening of amino acid NCAs. These reaction cycles were repeated a number of times.

A yet another process for preparing hyperbranched polylysines is based on derivatives of L-lysine*2HCl which are activated on the carboxyl group. According to this process hyperbranched polylysines were prepared in a one-pot synthesis with activation of the carboxyl group by means of N-hydroxy succinimide (NHS). NHS-activated L-lysine*2HCl was stirred for 23 hours in dimethyl sulfoxide (DMSO) with the addition of catalytic amounts of dimethyl aminopyridine (DMAP) and 3 equivalents of diisopropyl-ethylamine (DIEA), and the polymer was precipitated from ethyl acetate.

A yet another process for preparing hyperbranched polylysines is based the thermal addition copolymerization of amino acid mixtures. The thermal addition polymerization of free lysine is known and has been carried out under various reaction conditions. Plaquet and co-workers (Biochimie 1975, 57 1395-1396) polymerized L-lysine in aqueous solution at 105 °C for a period of up to 10 weeks, or else by heating at 165 °C for 8 hours. The reaction was carried out without catalyst and the yields, at below 72.5 % without exception, were very low. Harada (Bull. Chem. Soc. Japan 1959, 32, 1007-1008) polymerized L-lysine at 180 to 230 °C for between 30 minutes and 2 hours under a nitrogen atmosphere. Rohlfing and co-workers (Archives of Biochemistry and Biophysics 1969, 130, 441-448) polymerized L-lysine (free base)

under a nitrogen atmosphere at between 186 and 192 °C. WO 00/71600 described the condensation of L-lysine monohydrate in a pressure apparatus. Fox et al. (BioSystems 1976, 8, 40-44) used not only L-lysine but also L-lysine*HCl as starting monomers for the thermal polymerization at 195 °C. L-Lysine*HCl was brought to reaction with the addition of orthophosphoric acid at 195 °C.

US 8846842 B2 disclosed yet another process for preparing polylysines that does not require protective-group operations or activation of carboxyl groups and in which it is also possible to attain higher molecular weights than those known from the prior art. The object has been achieved by means of a process for preparing non-crosslinked hyperbranched polylysines by reacting:

(A) a salt of lysine with at least one acid,
(B) if appropriate, at least one amino acid other than lysine,
(C) if appropriate, at least one dicarboxylic or polycarboxylic acid or copolymerizable derivatives thereof and
(D) if appropriate, at least one diamine or polyamine or copolymerizable derivatives thereof,
(E) if appropriate, in at least one solvent at a temperature from 120 to 200 °C in the presence of at least one catalyst
(F) selected from the group consisting of (F1) tertiary amines and amidines, (F2) basic alkali metal salts, alkaline earth metal salts or quaternary ammonium salts, and (F3) alkoxides, alkanoates, chelates or organometallic compounds of metals from groups IIIA to VIIIA or IB to VB in the Periodic Table of the Elements. With this process it is possible to prepare non-crosslinked hyperbranched polylysines having a weight average molecular weight $M_w$ of up to 750000 Da.

Hyperbranched polylysines can, for example, be synthesized by direct thermal addition polymerization of L-lysine or ammonium salts of L-lysine. The thermal addition polymerization of lysine is carried out in the absence of solvent. WO 2007/060119 described the polycondensation of L-lysine hydrochloride in the presence of sodium hydroxide, water (10 wt.% based on the L-lysine hydrochloride) and the catalyst dibutyltin dilaurate. The mixture was heated with stirring to an internal temperature of 150 °C. After a reaction time of 5 hours, water was distilled off under reduced pressure (200 mbar), and after the major amount of water was removed the temperature was slowly raised to 180 °C and the pressure was reduced to 10 mbar. After 8 hours, 240 g of water distillate had been collected. Hennon et al. (Biochimie 1971, 53, 215-223) described the preparation of a brown resin starting from an aqueous solution of lysine (50 wt.%). The solution was concentrated by evaporation at 105 °C to 110 °C and then kept at 165 °C to 170 °C while it was agitated by directing a weak preheated nitrogen stream through it. The brown resin was obtained after 8 hours at 165 to 170 °C. Ho et al. described the synthesis of polylysine by thermally heating an aqueous lysine solution for two days at 160 °C. The obtained polylysine had a degree of branching between 0.50 and 0.54. When using microwave assisted heating at 200 °C, the obtained polylysine had a degree of branching between 0.30 and 0.32. US 2013/0123148 disclosed the preparation of polylysine by heating an aqueous lysine solution in the presence of catalytical amounts of dibutyltin dilaurate. According to the examples of US 2013/0123148, the obtained polylysines had a degree of branching above 0.30.

WO 2016/062578 A1 disclosed a process for the preparation of hyperbranched polylysines suitable for large scale production of polylysine with improved yield. According to the WO 2016/062578 A1 polylysines can be prepared by a process comprising the steps of: (a) heating a boiling aqueous reaction mixture comprising lysine and water in a weight ratio of 1:10 to 3:1 within 2 to 8 hours, for example within 4 to 8 hours, to a temperature in the range from 135 to 165 °C, and (b) keeping the reaction mixture of step (a) at a temperature in a range from 135 to 165 °C at a pressure below atmospheric pressure, wherein water is removed from the mixture, and any temperature increase is less than or equal to 30 °C in 60 minutes. Customary technical aqueous lysine solutions can be used in the process as disclosed in WO 2016/062578 A1 and no catalyst is required. At the end of the second step, the mixture is in a liquid state, e.g., a melt of polylysine, not a resin. Preferably, the aqueous starting mixture is an aqueous solution of lysine in water. The lysine comprised by the aqueous starting mixture can be L-lysine, D-lysine, or any mixture of L-lysine and D-lysine, e.g. a racemic mixture. The aqueous starting mixture can, for example, be an aqueous solution of L-lysine in water that contains 50 wt.% of L-lysine and 50 wt.% of water; e.g., ADM Liquid L-Lysine, Product Code: 035101 supplied by Archer Daniels Midland, Sewon L- Lysine® 50 percent liquid feed supplied by Paik Kwang, or BestAmino™ L-Lysine liquid feed grade supplied by CJ CheilJedang. Polylysine is formed from lysine in a polycondensation reaction in which water is released when an amino group of one lysine molecule and a carboxyl group of another lysine molecule react with each other to form an amide bond under production of water. The removal of water from the reaction mixture favours the formation of the polylysine. In general, the temperature of the reaction mixture is increased continuously. The process as disclosed in WO 2016/062578 A1 requires that water is removed from the reaction mixture. Any means suitable for removing water may be applied in order to remove water from the reaction mixture. Water is preferably evaporated from the mixture. The water is most preferably removed from the mixture by distillation. This process requires a pressure below atmospheric pressure in the second step. The pressure reduction facilitates the evaporation of water and thus accelerates the polycondensation reaction. According to the WO 2016/062578 A1 the weight average molecular weight

and number average molecular weight of the polylysine depends on the overall duration of the process and the temperature of the reaction mixture. If the reaction mixture is kept for longer times at higher temperatures, crosslinking is more likely to occur. Preferably, the process is carried out without a catalyst. The process may be carried out continuously or, preferably, batchwise. The process is preferably carried out in what is called a one-pot mode, in which the lysine is included in its entirety in the initial charge and the polycondensation reaction is carried out in a reactor with back-mixing. Also suitable, however, are reaction regimes in a multistage reactor system, a stirred-tank cascade, or in a tube reactor.

The primary ammonium salt of hyperbranched polylysines can for example be prepared via protonation of the amino groups of a hyperbranched polylysine with for example acidic agents e.g. protic acids, alkenylcarboxylic acids, alkylsulfonic acids. In the context of this specification the agents that may be used for the preparation of the primary ammonium salt of polylysines are called 'protonation agents'. Such protonation, results in a primary ammonium salt of hyperbranched polylysine that contains in its structure at least one primary ammonium cation ($-NH_3^+$) which cation is countered by an anion, and wherein the primary ammonium cation is the cationized form of an amino group of the hyperbranched polylysine. The structure of the anion depends on the reactant used for the protonation of the amino groups of the hyperbranched polylysine; exemplary anions include but are not limited to halide anions (e.g. fluoride, chloride, bromide, iodide) carboxylate anions, sulfonate anions. Preferably the anion is selected from the group consisting of halide anions, carboxylate anions, sulfonate anions, more preferably the anion is selected from the group consisting of halide anions, and carboxylate anions, even more preferably the anion is selected from the group consisting of halide anions, for example the anion is selected from the group consisting of fluoride, chloride, bromide, iodide, for example the anion is selected from the group consisting of chloride, bromide, iodide, for example the anion is selected from the group consisting of chloride and bromide, for example the anion is chloride.

### 3b The fibrous component

The fibrous component is as disclosed in claim 1, or in any one of A1 to A38, or as in any combination derived from the disclosure in sections 1, 3 and the entire specification including the claims.

The fibrous component consists of at least one fibrous element which fibrous element comprises vegetable fibers, and wherein the fibrous element is free of any fibers other than the vegetable fibers, and wherein the composition is free of any fibers other than the vegetable fibers of the fibrous component. Thus, both the fibrous component and the inventive compositions do comprise only vegetable fibers. Preferably, the vegetable fibers are selected from the group consisting of natural cellulose fibers, natural lignocellulosic fibers, and mixtures thereof. More preferably, the vegetable fibers are selected from the group consisting of wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf fibers, straw fibers, grass fibers, leaf fibers, and mixtures thereof. Even more preferably, the vegetable fibers are selected from the group consisting of wood fibers, reed fibers, and mixtures thereof. Most preferably, the vegetable fibers are wood fibers.

Preferably the fibrous element comprises vegetable fibers in an amount of at least 20, preferably at least 30, more preferably at least 40, for example at least 50, for example at least 60, for example at least 70, for example at least 80, for example at least 90, for example at least 95, for example at least 96, for example at least 97, for example at least 98, for example at least 99, for example at least 99.5 wt.% of the fibrous element, for example the fibrous element consists of vegetable fibers.

Preferably the fibrous element is selected from the group consisting of fibers, filaments, yarns, strips, strands, threads, staple fiber yarns, particles, chips, shavings, flakes, lamellae, pulp, and mixtures thereof; preferably the fibrous element is selected from the group consisting of fibers, filaments, yarns, threads, staple fiber yarns, particles, chips, shavings, flakes, pulp, and mixtures thereof; more preferably the fibrous element is a wood chip.

Preferably, the fibrous component consists of wood chips wherein the d50 which is the median value of the particle size distribution of the wood chips determined according to the ISO 17827-1:2016, is at least 1 and at most 50, preferably at least 1 and at most 40, for example at least 1 and most 30, for example at least 1 and at most 20, for example at least 1 and at most 15, for example at least 1 and at most 10, for example at least 1 and at most 8 mm.

## 4. Processes for making the compositions of the invention

The compositions of the invention can be prepared via a variety of processes which are well-known to one of ordinary skill in the art. For example, compositions of the invention can be prepared by mixing the various components that constitute the compositions of the invention. This mixing can take place well-before the formation of an object of the invention or a short-time before the actual use of a composition of the invention to form an object of the invention. By 'short time' is meant herein at most 60, preferably at most 30, most preferably at most 20, for example at most 15, for example at most 10, for example at most 6, for example at most 5 minutes. The polylysine component may be introduced in the composition as a liquid (e.g. an aqueous dispersion, or a solution), or as a solid (e.g. in a powder form),

or as a mixture of a liquid and a solid when for example a mixture of polylysines-X is used. Preferably, the polylysine component is introduced in the compositions of the invention as an aqueous solution or as a solid. Preferably the polylysine component is introduced in the compositions of the invention as an aqueous solution. Preferably the polylysine component is introduced in the compositions of the invention as a solid. Preferably the polylysine component is introduced in the compositions of the invention as a powder.

A process for preparing a composition of the invention comprises the steps of:

a) providing at least a constituent-A, which constituent-A consists of:

- a polylysine component, and
- a fibrous component,

wherein
the polylysine and the fibrous component are as disclosed in claim 1 or as in any one of A1 to A38, or as in any combination derived from the disclosure in sections 1, 3 and the entire specification including the claims,
b) mixing the polylysine and fibrous components and any other component (if any at all; e.g. water) contained in the composition of the invention, to obtain the composition of the invention, and
c) optionally collecting and isolating the obtained composition.

A process for preparing a composition of the invention is provided in the Examples.

**5. Processes for making the objects of the invention**

The process for making the objects (e.g. fibreboards) of the invention is as disclosed in any one of A39 to A44 or as in any combination derived from the disclosures in sections 1, 3, 4 and the entire specification including the claims.

A process for preparing objects of the invention is provided in the Examples.

**6. Objects of the invention**

The objects of the invention such as sheets, tapes, sticks, strips, films, cloths, containers, boards, panels, beams, frames, planks, engineered wood [for example plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), laminated timber (glulam; glued laminated timber), laminated veneer lumber (LVL), cross-laminated timber (CLT), parallel strand lumber (PSL), laminated strand lumber (LSL), finger joint, beams (including I-joints and I-beams), trusses (including roof and floor trusses), transparent wood composites], that contain vegetable fibers, especially vegetable fibers selected from the group consisting of natural cellulose fibers, natural lignocellulosic fibers, and mixtures thereof, more especially vegetable fibers selected from the group consisting of wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf (hibiscus cannabinus) fibers, straw fibers, grass fibers, leaf fibers, and mixtures thereof, most especially vegetable fibers selected from the group consisting of wood fibers, reed fibers, and mixtures thereof, for example vegetable fibers selected from the group consisting of wood fibers, and mixtures thereof, for example vegetable fibers selected from the group consisting of reed fibers, and mixtures thereof, as disclosed in the claims and the specification (also mentioned herein as inventive objects), are as disclosed in any one of A45 to A49, or any combination derived from the disclosures in sections 1, 3, 4, 5, and the entire specification including the claims.

Preferably the objects of the invention are selected from the group consisting of plywood, densified wood (including chemically densified wood), fibreboard [the term includes low-density fibreboard (LDF; known also as particle board or chip board), medium-density fibreboard (MDF), and high-density fibreboard (HDF; known also as waferboard, flakeboard)], oriented strand board (OSB), as preferred objects of the invention. Even more preferred objects of the invention are engineered wood and fibreboards, and most preferred fibreboards.

The objects of the invention can be prepared via a variety of ways (processes) which are well-known to one of ordinary skill in the art. Certain of these processes are as disclosed in any one of A39 to A44, or as in any combination derived from the disclosures in sections 1, 3, 4, 5, and the entire specification including the claims.

Examples of objects of the invention (and process for obtaining them) are provided in the Examples.

**7. Articles of the invention**

The articles of the invention are as disclosed in A50 or as in any combination derived from the disclosures in

sections 1, 3, 4, 5, 6 and the entire specification including the claims.

**8. Uses of the invention**

The invention provides for uses as disclosed in A51 or as in any combination derived from the disclosures in sections 1, 3, 4, 5, 6, 7 and the entire specification including the claims.

**9. Other disclosed embodiments of the invention**

The specification also discloses a process for making absorbents, 3D-printed items, automotive items (including but not limited to car parts, agricultural machines, composite structures, ceramic structures), marine items (including but not limited to ships, boats, parts for ships and boats), aerospace items (including but not limited to planes, helicopters, composite structures, ceramic structures, parts for planes, helicopters), medical items (including but not limited to artificial joints, meshes, woven or non-woven sheets, tapes, ribbons, bands, cables, tube-like products for e.g. ligament replacement, composite structures, ceramic structures), defense items (including but not limited to ballistic protection, body armour, ballistic vests, ballistic helmets, ballistic vehicle protection, composite structures, ceramic structures), sports/recreational items (including but not limited to toys, fencing, skates, skateboarding, snowboarding, suspension lines on sport parachutes, paragliders, kites, kite lines for kite sports, climbing equipment, composite structures, ceramic structures), architectural items, (including but not limited to windows, doors, (pseudo-)walls, cable), bottling items, household items (including but not limited to household appliances, whitegoods, furniture, computer housings), machinery (including but not limited to can and bottle handling machine parts, moving parts on weaving machines, bearings, gears, composite structures, ceramic structures, computer housings), can items, coil items, energy related items (including but not limited to generators for wind, tide or solar energy), and electricity related items (including but not limited to cabinets for electrical wire or switch boards), wherein the process comprises the step of providing any one or any combination of i) to iii):

i) a composition as disclosed in claim 1 or in any one of A1 to A38 or as in any combination derived from the disclosure in sections 1, 3 and the entire specification including the claims;
ii) an object as disclosed in any one of A45 to A49, or any combination derived from the disclosure in sections 1, 3, 4, 5, 6 and the entire specification including the claims;
iii) an article according as disclosed in A50, or any combination derived from the disclosure in sections 1, 3, 4, 5, 6, 7 and the entire specification including the claims.

**10. Examples**

The invention is explained in more detail with reference to the following non-limiting examples which are by way of illustration only.

All the Examples shown in this section were carried out in a controlled laboratory environment at standard conditions (as these are defined in the specification), relative humidity of 50±1 % and an airflow of ≤ 0.1 m/s, unless otherwise explicitly specified.

**A. Chemicals, raw materials and other materials**

SEWON L-Lysine® (50 wt.% of L-lysine in water, Lot No. 181224) was supplied by Daesang and it was used as supplied. SUPRO® 500E (light yellow powder; soy protein isolate, with a protein content of > 90 wt.% (reported by the supplier), and a dry content of 94 wt.% (reported by the supplier) was supplied by DuPont Danisco and it was used as supplied. The soy protein isolate (abbreviated as SPI) represents the protein content of the SUPRO@ 500E taking into account also the dry content of the SUPRO@ 500E. The amount of SPI shown in the compositions of Table 1 refers to the amount of protein having taken into account also the dry content of the SUPRO@ 500E used in the compositions of Table 1. Soy bean meal defatted (abbreviated as SBM) (light yellow powder with a protein content of 47 wt.%) was supplied by Extreme Carp Baits (www.ecbaits.nl). The amount of SBM shown in the compositions of Table 1 refers to the amount of protein of the SBM used in the compositions of Table 1. GOHSENX™ Z-220 [solid; acetoacetylated poly(vinylalcohol), saponification value 90.5-92.5 mol% (reported by the supplier), and volatile matter: max 5.0 (reported by the supplier); the GOHSENX™ Z-220 had a viscosity 11.5-15.0 mPa.s (measured at 20 °C as a 4 wt.% aqueous solution; (reported by the supplier); pH: 3.5-5.5 (measured at 30 °C as a 4 wt.% aqueous solution; (reported by the supplier)] was supplied by Mitsubishi Chemicals. The GOHSENX™ Z-220 was diluted in water in order to prepare an 16.5 wt.% aqueous solution (abbreviated AAPVA-AQ); this aqueous solution (AAPVA-AQ) was used in the examples for the preparation of certain compositions and fibreboards; the abbreviation AAPVA refers to the solid content of the AAPVA-AQ. The Starlig® MG50 supplied by LignoStart Internation B.V. was used as a source for magnesium lignosulfonate (CAS No.: 8061-54-9); Starlig® MG50 is an aqueous solution that contains 50 wt.% of magnesium lignosulfonate in water (pH= 5.5; Mg content is 6 wt.%); the amount of magnesium lignosulfonate shown in the compositions of Table 1 refers to the amount of magnesium lignosulfonate itself and not to that of Starlig® MG50. ε-Polylysine (light yellow powder with a purity of 99.4%) was supplied by Bonding Chemical. The ε-Polylysine had a $M_n$ of 21301 Da, a $M_w$ of 22061 Da and a polydispersity (PD) (=$M_w/M_n$) of 1.04, determined by the GPC-Method described in this specification, and an apparent viscosity determined by the Rheometry Method described in this specification, of 32480 mPa.s. This polylysine is mentioned in the examples as PLL-5 and it is not according to the claimed invention. Wood chips with a water content of 2.7 wt.%, density of 240 kg/$m^3$ and a d50 (median value of the particle size distribution of the wood chips; according to the ISO 17827-1:2016) of 4.5 mm, were used to prepare the objects (fibreboards; FB) shown in the Examples.

**B. Preparation of a polylysine component**

**B.1 Hyperbranched Polylysine 1 (PLL-1)**

The preparation of the hyperbranched polylysine 1 (PLL-1) was carried out as follows: 3400 g of SEWON L-Lysine® were added at room temperature, to a 5 litre high-pressure reactor equipped with a distillation set up which was connected to the reactor via a pressure release valve (herein 'PR valve'); once all the amount of SEWON L-Lysine® was introduced into the reactor, the PR valve was closed off. Subsequently, the temperature in the reactor was slowly (over 2 hours) raised to 130 °C and the pressure reached 3.5 bar. Once the temperature in the reactor reached 130 °C, the PR valve was then carefully opened to allow for the distillation of water; the temperature of the reactor was maintained at 130 °C up until a solids content of 82 ± 1 wt.% was obtained; during this stage and in order to maintain a mass of about 3400 g in the reactor, SEWON L-Lysine® was being pumped into the reactor at the same rate that water was being distilled off. Once a solids content of 82 ± 1 wt.% was obtained (at that time the pressure in the reactor dropped from 3.5 bar to 1.2 bar), then the PR valve was closed off. Subsequently, the temperature and the pressure in the reactor were raised to 160 °C and 5±0.5 bar, respectively. At this stage, the temperature and the pressure in the reactor were maintained at 160 °C and 5±0.5 bar, respectively for as long as the apparent viscosity of the content of the reactor (as the apparent viscosity is determined in the specification) reached 612 mPa.s; during this stage, water was being distilled off by periodically and carefully opening the PR valve making sure that the pressure in the reactor was maintained at 5±0.5 bar. Once the apparent viscosity of 612 mPa.s was achieved, the temperature in the reactor was then decreased to 90 °C whilst the PR valve was closed and whilst pumping into the reactor enough water to reach a solids content of 75±1 wt.%; subsequently, the content of the reactor was discharged into an aluminium tray. Immediately afterwards, the aluminium tray was placed into a vacuum oven at 100 °C under reduced pressure of 50 mbar for 16 hours to remove the water. The end product -the hyperbranched polylysine 1 (PLL-1)- was obtained as a dark brown solid (at standard conditions). The hyperbranched polylysine 1 (PLL-1) was grinded with a KRUPS F203 grinder prior being used in the preparation of the fibreboards.

Characterization of the hyperbranched polylysine 1 (PLL-1): DB: 0.4 [D = 18.8 (integral at 4.15-4.40 ppm); Lα = 13.7 (integral at 3.90- 4.10 ppm); Lε = 43.9 (integral at 3.25-3.30 ppm)], gel content: 0.0 %; $M_n$: 3088 Da, $M_w$: 16369 Da, polydispersity (PD) (=$M_w/M_n$): 5.30; amine number (AN): 361 mg KOH/g, acid value (AV): 46 mg KOH/g (three ERC peaks were recorded in the Titration Method), apparent viscosity: 701 mPa.s.

**B.2 Hyperbranched Polylysine 2 (PLL-2)**

The preparation of the hyperbranched polylysine 2 (PLL-2) was carried out as follows: 6254 g of SEWON L-Lysine® were added at room temperature, to a 10 litre glass reactor equipped with a distillation set up. Subsequently, the temperature in the reactor was slowly (over 4 hours) raised to 105 °C (the slow increase in temperature is essential to avoid precipitation of unreacted L-lysine in the reactor, which can occur if too much water has distilled off before sufficient reaction conversion). Once the temperature in the reactor reached 105°C, the distillation of water starts. The temperature of the reactor was slowly increased to 160 °C. At the moment that the reaction reached 130°C, 2610 g SEWON L-Lysine® was added slowly into the reactor at the same rate that water was being distilled off. Subsequently, when temperature reached 160 °C, the temperature was maintained at 160 °C for 1 hour. After 1 hour at 160°C, vacuum was applied slowly to 100 mbar for as long as the apparent viscosity of the content of the reactor (as the apparent viscosity is determined in the specification) reached 450 mPa.s. Once the apparent viscosity of 450 mPa.s was achieved, the temperature in the reactor was then decreased to 90 °C and water was dosed into the reactor and reach a solids content of 75±1 wt.%; subsequently, the content of the reactor was discharged into an aluminium tray. Immediately afterwards, the aluminium tray was placed into a vacuum oven at 100 °C under reduced pressure of 50 mbar for 16 hours to remove the water. The end product -the hyperbranched polylysine 2 (PLL-2)- was obtained as a dark brown solid (at standard conditions). The hyperbranched polylysine 2 (PLL-2) was grinded with a KRUPS F203 grinder prior

being used in the preparation of the fibreboards.

Characterization of the hyperbranched polylysine 2 (PLL-2): DB: 0.31 [D = 11.9 (integral at 4.15-4.40 ppm); $L\alpha$ = 11.4 (integral at 3.90- 4.10 ppm); $L\varepsilon$ = 42.4 (integral at 3.25-3.30 ppm)], gel content: 0.0 %; $M_n$: 2678 Da, $M_w$: 12599 Da, polydispersity (PD) (=$M_w/M_n$): 4.71 amine number (AN): 372 mg KOH/g, acid value (AV): 69 mg KOH/g (three ERC peaks were recorded in the Titration Method), apparent viscosity: 485 mPa.s.

### B.3 Hyperbranched Polylysine 3 (PLL-3)

The preparation of the hyperbranched polylysine 3 (PLL-3) was carried out as follows: 6254 g of SEWON L-Lysine® were added at room temperature, to a 10 litre glass reactor equipped with a distillation set up. Subsequently, the temperature in the reactor was slowly (over 4 hours) raised to 105 °C (the slow increase in temperature is essential to avoid precipitation of unreacted L-lysine in the reactor, which can occur if too much water has distilled off before sufficient reaction conversion). Once the temperature in the reactor reached 105°C, the distillation of water starts. The temperature of the reactor was slowly increased to 160 °C. At the moment that the reaction reached 130°C, 2610 g SEWON L-Lysine® was added slowly into the reactor at the same rate that water was being distilled off. Subsequently, when temperature reached 160 °C, the temperature was maintained at 160 °C for 1 hour. After 1 hour at 160°C, vacuum was applied slowly to 100 mbar for as long as the apparent viscosity of the content of the reactor (as the apparent viscosity is determined in the specification) reached 1500 mPa.s. Once the apparent viscosity of 1500 mPa.s was achieved, the temperature in the reactor was then decreased to 90 °C and water was dosed into the reactor and reach a solids content of 75±1 wt.%; subsequently, the content of the reactor was discharged into an aluminium tray. Immediately afterwards, the aluminium tray was placed into a vacuum oven at 100 °C under reduced pressure of 50 mbar for 16 hours to remove the water. The end product -the hyperbranched polylysine 3 (PLL3)- was obtained as a dark brown solid (at standard conditions). The hyperbranched polylysine 3 (PLL-3) was grinded with a KRUPS F203 grinder prior being used in the preparation of the fibreboards.

Characterization of the hyperbranched polylysine 3 (PLL-3): DB: 0.33 [D = 13.4 (integral at 4.15-4.40 ppm); $L\alpha$ = 11.7 (integral at 3.90- 4.10 ppm); $L\varepsilon$ = 41.8 (integral at 3.25-3.30 ppm)], gel content: 0.0 %; $M_n$: 4535 Da, $M_w$: 26478 Da, polydispersity (PD) (=$M_w/M_n$): 5.84, amine number (AN): 337 mg KOH/g, acid value (AV): 49 mg KOH/g (three ERC peaks were recorded in the Titration Method), apparent viscosity: 1520 mPa.s.

### B.4 Hyperbranched Polylysine 4 (PLL-4)

The preparation of the hyperbranched polylysine 4 (PLL-4) was carried out as follows: 3400 g of SEWON L-Lysine® were added at room temperature, to a 5 litre high-pressure reactor equipped with a distillation set up which was connected to the reactor via a pressure release valve (herein 'PR valve'); once all the amount of SEWON L-Lysine® was introduced into the reactor, the PR valve was closed off. Subsequently, the temperature in the reactor was slowly (over 2 hours) raised to 130 °C about 2 hours and the pressure reached 3.5 bar. Once the temperature in the reactor reached 130 °C, the PR valve was then carefully opened to allow for the distillation of water; the temperature of the reactor was maintained at 130 °C up until a solids content of 82 ± 1 wt.% was obtained; during this stage and in order to maintain a mass of about 3400 g in the reactor, SEWON L-Lysine® was being pumped into the reactor at the same rate that water was being distilled off. Once a solids content of 82 ± 1 wt.% was obtained (at that time the pressure in the reactor dropped from 3.5 bar to 1.2 bar), then the PR valve was closed off. Subsequently, the temperature and the pressure in the reactor were raised to 190 °C and 5±0.5 bar, respectively. At this stage, the temperature and the pressure in the reactor were maintained at 190 °C and 5±0.5 bar, respectively for as long as the apparent viscosity of the content of the reactor (as the apparent viscosity is determined in the specification) reached 4800 mPa.s; during this stage, water was being distilled off by periodically and carefully opening the PR valve making sure that the pressure in the reactor was maintained at 5±0.5 bar. Once the apparent viscosity of 4800 mPa.s was achieved, the temperature in the reactor was then decreased to 90 °C whilst the reactor was closed and whilst pumping into the reactor enough water to reach a solids content of 75±1 wt.%; subsequently, the content of the reactor was discharged into an aluminium tray. Immediately afterwards, the aluminium tray was placed into a vacuum oven at 100 °C under reduced pressure of 50 mbar for 16 hours to remove the water. The end product -the hyperbranched polylysine 4 (PLL-4)- was obtained as a dark brown solid (at standard conditions). The hyperbranched polylysine 4 (PLL-4) was grinded with a KRUPS F203 grinder prior being used in the preparation of the fibreboards.

Characterization of the hyperbranched polylysine 4 (PLL-4): DB: 0.27 [D = 12.45 (integral at 4.15-4.40 ppm); $L\alpha$ = 19.38 (integral at 3.90- 4.10 ppm); $L\varepsilon$ = 42.76 (integral at 3.25-3.30 ppm)], gel content: 5.0 %, $M_n$: n.m. Da (insoluble), $M_w$: n.m. Da (insoluble), polydispersity (PD) (=$M_w/M_n$): n.m., amine number (AN): 213 mg KOH/g, acid value (AV): 52 mg KOH/g (three ERC peaks were recorded in the Titration Method), apparent viscosity: 4900 mPa.s.

## C. Analytical Methods and Techniques

### C.1 Determination of the $M_n$, $M_w$ ('Gel-Permeation Chromatography Method' abbreviated also as 'GPC-Method')

The number average molecular weight ($M_n$) and the weight average molecular weight ($M_w$) were determined by Gel Permeation Chromatography (GPC) calibrated with a set of narrow polyethylene glycol standards (CAS 25322-68-3; product number PL2070-0201; molecular weights between 200 and 30000 Da) Standards are supplied by Agilent Technologies and using as eluent a solution of 100 mM Sodium Acetate and 50 mM acetic acid in MilliQ water (the solution having a pH of 4.5) at a flow rate of 1.0 mL/min at 40 °C. 15 mg of sample dissolved in 1.5 ml of eluent were used for the measurement; the injection volume was 100 μL.The GPC measurements were carried out on an Agilent 1260 MDS system equipped with: i) a refractive index (RI) detector [Aqilent 1260MDS (10μL cell); supplied by Agilent]; ii) a separation module equipped with two Suprema analytical SEC columns (7.8 x 300 mm, pore size 100 Å, filled with particles having particle size of 3 μm, product number: SUA0830031e2) supplied by Polymer Standards Service (PSS). The $M_n$ and $M_w$ were determined with the help of suitable software for data processing (ChemStation, supplied by Agilent).

### C.2 Determination of the polydispersity (PD)

Upon determining the $M_n$ and $M_w$ via the Gel-Permeation Chromatography Method, the polydispersity PD was calculated according to the following equation: PD= $M_w/M_n$.

### C.3 Determination of the amine number (AN) and the acid value (AV) ('Titration Method')

The amine number (AN) and the acid value (AV) were determined by back-titrimetric analysis using the titrator 808 Titrando (supplied by Metrohm AG) with the 814 USB sample processor (supplied by Metrohm AG), and two electrodes one for the measurement of the pH (pH glass electrode supplied by Metrohm AG with product No. 6.0150.100) and a reference electrode (conductivity measuring cell c=0.8 $cm^{-1}$ with Pt1000 (fixed cable) supplied by Metrohm AG with product No. 6.9303.110) equipped with a pH meter and titrating the titrate with a solution of 1.000 N KOH in water was used. The titrate consisted of 1.000 g of polylysine (sample) (the amount refers to solids content), 60.00 mL of Millipore Ultra RO water and 10.000 mL of a solution of 1.000 N HCl in water [Titripur® supplied by Merck; product number 1.09057]. The data processing and control handling of all titrations described in this were accomplished via the use of the software Tiamo™ 2.4 supplied by Metrohm AG.

The titration curve [pH vs. Volume of titrant (x-axis)] (abbreviated as TC) and the first derivative curve of the TC [electrical potential vs. Volume of titrant (x-axis)] are recorded simultaneously and are plotted together in the same graph (pH on Y1-axis and electrical potential on Y2-axis, and volume of titrant on X-axis). The first derivative curve of the TC is known as ERC which stands for Equivalence point Recognition Criteria and is expressed in units for electrical potential (mV). The ERC affords either 2 or 3 peaks (ERC peaks) in succession to each other. Each of these ERC peaks corresponds to a certain volume of titrant. One of these ERC peaks -typically the one of highest signal (delta voltage)- corresponds to the lowest volume of the titrant ($V_{min}$) (in mL) and another one ERC peak corresponds to the highest volume of the titrant ($V_{max}$) (in mL).

The amine number (AN) is determined according to the following formula:

$$\text{Amine number (mg KOH/g sample)} = 56.1 * (V_{max} - V_{min})$$

wherein $V_{min}$ and $V_{max}$ are as explained above.

The acid value (AV) is determined according to the following formula:

$$\text{Acid value (mg KOH/g sample)} = 56.1 * [V_{min} - [10.00 - (V_{max} - V_{min})]]$$

wherein $V_{min}$, $V_{max}$ are as explained above.

The measurements for the determination of the AN and AV were performed in duplicate and the reported values for each of the AN and AV were the average of these measurements.

### C.4 Determination of the apparent viscosity ('Rheometry Method')

The apparent viscosity (shear stress divided by the shear rate) was determined using the rotational rheometer

RheolabQC supplied by Anton Paar, connected to a water bath, controlled at 23.0 °C. This method is based on ISO 3219:1993. For this measurement, the appropriate spindle/cup combination and shear rate are chosen based on the estimated apparent viscosity. For all our experiments we used a Z3 spindle/cup combination which and a shear rate of 100 $s^{-1}$. The cup is then filled with sample (polylysine dissolved in water with a solids content of 60 $\pm$ 1 %). The spindle is inserted into the cup, the cup is mounted in the viscometer and the spindle is connected to the instrument. The correct program (for all our measurements we selected the program for the Z3 spindle in combination with a shear rate of 100 $s^{-1}$) is selected on the RheolabQC and the measurement is performed.

**C.5 Determination of the solids content ('Solids-content Method')**

The solids content (wt.%) was determined using a Halogen Moisture Analyzer HR73 supplied by Mettler Toledo. For this measurement, 1.00 g of sample (polylysine dissolved in water) is weighed onto a glass fiber pad which is placed on an aluminium pan and then heated at 140 °C for 30 minutes. The solids content is determined automatically based on the difference in mass before and after the heating at 140 °C.

**C.6 Determination of the water content ('Water-Content Method')**

The amount of water contained in a an entity for example in a composition, or in a polylysine component, or in a fibrous element or in wood chips, is determined by drying said entity at 120 °C for 24 hours under reduced pressure (50 mbar) in a Thermo Scientific® VacuTherm vacuum oven supplied by Thermo Fischer Scientific. The amount of water contained in the entity was calculated according to the following equation:

$$\text{Water (wt.\% of the entity)} = [1- (M_2/M_1)] \times 100$$

wherein

$M_1$: the mass of the entity prior to drying.
$M_2$: the mass of the entity upon drying (measured within 5 minutes after removing the sample from the oven).

**C.7 Determination of the degree of branching**

The degree of branching (DB) of a polylysine is determined by $^1$H-NMR spectroscopy and calculated according to the equation 1:

$$DB = \frac{2D}{2D + L}$$

(equation 1)

wherein

D is equal to or higher than 0, L is equal to or higher than 0, and at least one of the D and L is higher than 0; and wherein
D is the integral of the $^1$H-NMR peaks corresponding to the methine proton (shorthand for the proton to the tertiary carbon; indicated in bold in Formulae D1a and D1b) of any number of the following group(s) shown in Formulae D1a and D1b that may be present in the polylysine (if no such methine protons are present in the polylysine, the D is equal to zero):

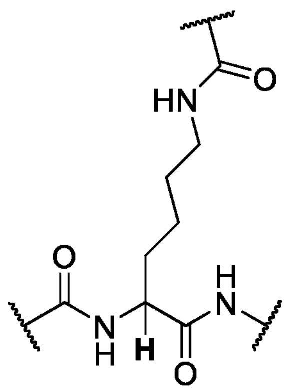

Formula D1a

and

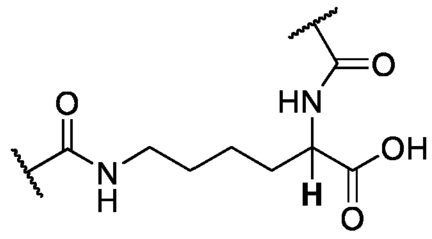

Formula D1b

L represents the sum of $L_\alpha$ and $L_\varepsilon$, wherein

$L_\alpha$ is the integral of the $^1$H-NMR peaks corresponding to the methine proton (shorthand for the proton to the tertiary carbon; indicated in bold in Formulae L1a and L1b) of any number of any one of the following group(s) shown in Formulae L1a and L1b that may be present in the polylysine (if no such methine protons are present in the polylysine, the $L_\alpha$ is equal to zero):

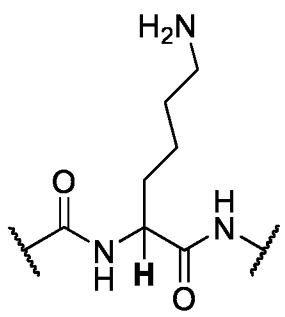

Formula L1a

and

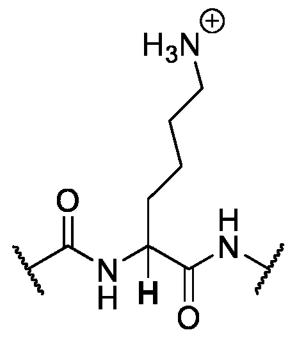

Formula L1b

and

$L_\varepsilon$ is the integral of the $^1$H-NMR peaks corresponding to the methine proton (shorthand for the proton to the tertiary carbon indicated in bold in Formulae L2a and L2b) of any number of any one of the following group(s) shown in Formulae L2a and L2b that may be present in the polylysine (if no such methine protons are present in the polylysine, the $L_\varepsilon$ is equal to zero):

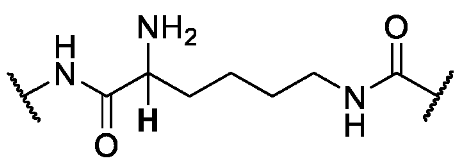

Formula L2a

and

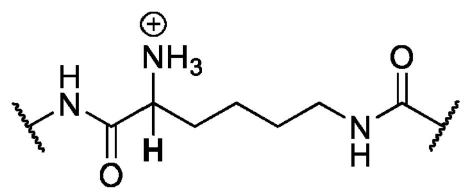

Formula L2b

The DB ranges from and including 0 up to and including 1.

The $^1$H-NMR spectra were recorded at room temperature on a Bruker Ascend™ 400 Spectrometer, using deuterated methanol (also known as tetradeuteromethanol or methanol-$d_4$) as solvent. Methanol-$d_4$ is the preferred solvent; however, other suitable deuterated solvents may be used. In the case of methanol-$d_4$ the chemical shifts of the $^1$H-NMR peaks corresponding to:

- the D-proton(s) are found at 4.15-4.40 ppm;
- the $L_\alpha$-proton(s) are found at 3.90-4.10 ppm; and

- the $L_{\varepsilon}$-proton(s) are found at 3.25-3.30 ppm.

### C.8 Determination of the gel content ('Gel-Content Method')

The gel content of a polylysine was determined as follows:
A mixture of 10 wt.% solids content of a polylysine in water was prepared and stored at room temperature for 24 hours. Subsequently, an amount of 3000 g of the mixture thus prepared (herein sample), was filtrated through a pre-weighed ($Mf_{before}$) filter e.g. a folded qualitative filter paper, in order to remove any insoluble fraction of average size of at least 5 micron and higher. Once the filtration was completed, the filter was washed with water, the amount of which was double of the amount of the sample. Subsequently, the filter was placed in a vacuum oven at 40 °C under a pressure of 50 mbar, for 12 hours in order to remove any water. Subsequently, the filter was weighed again ($Mf_{after}$).
The gel content was calculated from the equation 2:

$$Gel\ content\ (\%) = \left(\frac{Mf_{after} - Mf_{before}}{M_{polylysine}}\right) x100$$

(equation 2)

wherein

$Mf_{after}$ is the mass of the filter after the removal of the water,
$Mf_{before}$ is the mass of the filter before the filtration of the sample, and
$M_{polylysine}$ is the mass of the polylysine in the sample (taken into account the solids content of the sample). Thus, in 3000 g of sample having 10 % solids content, the $M_{polylysine}$ is 30 g.

## D. Preparation of the comparative and inventive compositions and objects (fibreboards; FB) thereof

### D.1 Preparation of the comparative and inventive compositions

The comparative and inventive compositions shown in Table 1 were prepared by mixing the various components of each of those compositions via handshaking for 5 minutes. It is reminded that: a) the abbreviation SPI represents the dry content of the SUPRO@ 500E which was used in preparing the compositions where SPI is mentioned; and b) the abbreviation AAPVA represents to the solid content of the AAPVA-AQ which is an aqueous solution of the GOHSENX™ Z-220 (16.5 wt.%); the AAPVA-AQ was used in preparing the compositions where the AAPVA is mentioned.

### D.2 Preparation of the comparative and inventive objects (fibreboards; FB)

The comparative and inventive objects i.e. fibreboards, were prepared by subjecting their corresponding compositions to simultaneous heating (210 °C) and pressure [9 kg/cm$^2$= 882.6 kPa)] (hot-pressed) for 5 minutes using a suitable hot-press (e.g. Fontype TP800) to form boards of 17 (L) x 25 (W) x 1 (T) cm (surface of 425 cm$^2$).
The thickness of the inventive fibreboard FB-I1 was 10.4 mm, and the density of the inventive fibreboard FB-I1 was 685 kg/m$^3$. The thickness of each of the inventive fibreboards FB-I2 to FB-I5 was 10.0 mm. and the density of each of the inventive fibreboards FB-I2 to FB-I5 was 700 kg/m$^3$.
The thickness of each of the comparative fibreboards FB-C1 to FB-C10 was 10.0 mm. The density of the comparative fibreboard FB-C1 was 725 kg/cm$^3$ while the density of each of the comparative fibreboards FB-C2 to FB-C10 was 700 kg/m$^3$

## E. Methods for determining properties of the fibreboards

### E.1 Determination of the length, width and thickness

The length (L) of the specimens was measured with a ruler at 3 different points of a specimen and the average of these 3 measurements was recorded as the width of the specimen.
The width (W) of the specimens was measured with a digital ruler at 3 different points of a specimen and the average of these 3 measurements was recorded as the width of the specimen.

The thickness (T) of the specimens was measured with a digital ruler at 3 different points of a specimen and the average of these 3 measurements was recorded as the thickness of the specimen.

**E.2 Determination of the density (d)**

Specimens were prepared by cutting the fibreboard prepared in one piece of 150 mm by 40 mm. The length (L; in m), width (W; in m) and thickness (T; in m) of the specimens were measured as mentioned above, as well as their weight (M; in kg).

The density (d; in kg/$m^3$) of a specimen was calculated according to the following equation and the average of 2 calculations -corresponding to two different specimens of the fibreboard- was recorded as the density of the fibreboard:

$$d = M / (L \times W \times T)$$

**E.3 Determination of the flexural properties (Static Bending Method)**

The assessment of the flexural properties i.e. i) the modulus of rupture ($R_b$) and ii) the apparent modulus of elasticity (E) were determined by static bending tests according to the ASTM D1037-12 and in particular section 9 (entitled 'Static Bending') of the ASTM D1037-12, subject to the following two differences from the provisions of the section 9 of the ASTM D1037-12: i) the specimens were prepared by cutting the produced panel in two pieces of 150 ± 1 mm by 40 ± 1 mm, and ii) each specimen was placed in a 3-point (centre loading) fixture and the length of the span (L) was fixed to 100 mm.

The static bending tests were carried out on objects prepared upon subjecting their corresponding compositions to simultaneous heat (210 °C) and pressure (9 kg/$cm^2$= = 882.6 kPa) for 5 min. In §9.7 of the ASTM D1037-12, the modulus of rupture ($R_b$) and the apparent modulus of elasticity (E) are defined and calculated according to the following two equations:

$$R_b = \frac{3P_{max}L}{2bd^2}$$

$$E = \frac{L^3}{4bd^3}\frac{\Delta P}{\Delta y}$$

wherein

b= width of specimen measured in dry conditions (in mm);
d= thickness of specimen measured in dry conditions (in mm);
$\Delta P/\Delta y$ = slope of straight line portion of the load-deflection curve (in N/mm);
$P_{max}$ = maximum load (in N);
L = length of span (in mm);
$R_b$ = modulus of rupture (kPa);
E = apparent modulus of elasticity (kPa).

The static bending tests were carried out on ZMART.PRO 1445 supplied by ZwickRoell, at a constant rate of speed of 3 mm/min and with the load applied to the centre of each specimen. The test was continued until rupture of the specimen, while recording all force vs. deflection data. From the data obtained, one can calculate the modulus of rupture ($R_b$) and apparent modulus of elasticity (E), according to the equations provided in §9.7 of the ASTM D1037-12 and which are offered above for convenience. In cases where the object e.g. fibreboard, has been shuttered -due to its fragility- once it was attempted to be clamped on the ZMART.PRO 1445 and no measurement was carried out because of said sample's fragility, each of the values of $R_b$ and E were set as equal to zero. In other words objects e.g. fibreboards that were so fragile that no measurement of their flexural properties could be performed, received $R_b$ and E values equal to zero. An example of such situation is the comparative object FB-C2 shown in Table 1.

For any comparison of the flexural properties between an inventive and comparative specimen -and in addition

to well-established principles of proper comparison as those are known to the skilled person in the art-, it is emphasized that:

- the total amount of polymeric and non-polymeric entities in the comparative and inventive compositions should be the same,
- the fibrous component of the comparative and inventive compositions should be the same (in species and amounts), and
- the rest of the components of the comparative and inventive compositions should be the same in species and amounts,
- the thickness of the comparative specimen should be within ±8 % from the thickness of the corresponding inventive specimen, and
- the density of the comparative specimen should be within ±8 % from the density of the corresponding inventive specimen.

**F. Results and Discussion**

Table 1 presents the compositions according to the invention I1 to I5 (inventive compositions), the objects (fibreboards) prepared from the inventive compositions I1 to I5, FB-I1 to FB-I5 (inventive objects) and the flexural properties ($R_b$ = modulus of rupture; E = apparent modulus of elasticity) of the inventive objects (fibreboards). In addition, Table 1 presents the compositions not according to the invention C1 to C10 (comparative compositions), the objects (fibreboards) prepared from the comparative compositions C1 to C10, namely FB-C1 to FB-C10 (comparative objects) and the flexural properties ($R_b$ = modulus of rupture; E = apparent modulus of elasticity) of the comparative objects (fibreboards).

PLL-1, PLL-2 and PLL-3 are hyperbranched polylysines according to the claimed invention. PLL-5 and PLL-4 are not according to the claimed invention.

C1 is a comparative composition and represents the best performing composition out of all the examples disclosed in US 2007/0277928 to AKZO Nobel Inc. This composition was shown in Example 3 (and Table 2) of the US 2007/0277928 wherein the weight ratio of SPI to AAPVA (=weight of SPI/weight of AAPVA) was equal to 2 (in Table 3 of the the US 2007/0277928, this corresponds to the experiment where the amount of SPI was 2 g and the amount of AAPVA was 1 g).

C2 is a comparative composition because the PLL-5 is not according to the invention. C3 is also comparative composition because the PLL-4 is not according to the invention.

Each one of C4 to C8 is a comparative composition because the protein content in each one of these compositions was higher than 0.3 wt% of the composition. The C6 to C8 offer a simulation of the compositions of CN 110903786 A with respect to various amounts of protein. C6 was formulated with the lowest possible amount of protein content potentially disclosed by CN 110903786 A as this is explained in the description.

The ratio of the weight of the magnesium lignosulfonate (representing constituent-C) divided by the weight of the PLL-3 (polylysine component) in C9 was equal to 1. The C9 offers a simulation of the compositions of WO 2016/009054 A1 (magnesium lignosulfonate was one of the most preferred polyphenolic macromolecular compounds (cf. WO 2016/009054 A1, p.3, ll. 1-4).

The ratio of the weight of the magnesium lignosulfonate(representing constituent-C) divided by the weight of the PLL-3 (polylysine component) in C10 was equal to 2. The C10 offers a simulation of the compositions of WO 2016/009054 A1 (magnesium lignosulfonate was one of the most preferred polyphenolic macromolecular compounds (cf. WO 2016/009054 A1, p.3, ll. 1-4).

The ratio of the weight of the magnesium lignosulfonate (representing constituent-C) divided by the weight of the PLL-3 (polylysine component) in I5 was equal to 0.13.

Each one of the objects (fibreboard) according to the invention FB-I1 to FB-I5 (herein inventive objects) had surprisingly enhanced flexural properties over any one of the objects (fibreboard) FB-C1 to FB-C10 not according to the invention (herein comparative objects) (see Table 1).

More specifically, the inventive objects FB-I1 to FB-I5 had:

- a modulus of rupture ($R_b$) in the range of 12.2 to 19.1 MPa, and
- an apparent modulus of elasticity (E) in the range of 1250 to 1530 MPa.

And, the inventive objects FB-I1 to FB-I4 had:

- an even higher modulus of rupture ($R_b$) in the range of 13.0 to 19.1 MPa, and
- an even higher apparent modulus of elasticity (E) in the range of 1430 to 1530 MPa.

The comparative objects FB-C1 to FB-C10 had:

- a modulus of rupture ($R_b$) in the range of 0 to 9.2 MPa, and
- an apparent modulus of elasticity (E) in the range of 0 to 985 MPa.

Upon comparing the flexural properties of the inventive objects FB-I1 to FB-I5 over the comparative objects FB-C1 to FB-C10, the inventive objects FB-I1 to FB-I5 showed an improvement of at least 33 % on the modulus of rapture ($R_b$) and at least 27 % on the modulus of elasticity (E) over the comparative objects FB-C1 to FB-C10.

Upon comparing the flexural properties of the inventive objects FB-I1 to FB-I4 over the comparative objects FB-C1 to FB-C10, the inventive objects FB-I1 to FB-I4 showed an even greater improvement of at least 41 % on the modulus of rapture ($R_b$) and at least 45 % on the modulus of elasticity (E) over the comparative objects FB-C1 to FB-C10.

From the results, it becomes clear that the inventive objects had surprisingly significantly enhanced flexural properties -i.e. modulus of rupture ($R_b$) and apparent modulus of elasticity (E)- over the comparative objects. Therefore, only the compositions of the claimed invention were able to provide for objects (e.g. fibreboards) having enhanced flexural properties.

**Table 1**

| Composition | | | | | | | | | | | Object (Fibreboard) | Flexural Properties of Object (Fibreboard) | |
|---|---|---|---|---|---|---|---|---|---|---|---|---|---|
| Index No. | Wood chips (g) | PLL-5 (g) | PLL-4 (g) | PLL-2 (g) | PLL-3 (g) | PLL-1 (g) | SPI (g) | SBM (g) | AAPVA (g) | Magnesium Lignosulfonate (g) | | $R_b$ (MPa) | E (MPa) |
| C2 | 290.4 | 17.4 | | | | | | | | | FB-C2 | 0.0 | 0 |
| C3 | 290.4 | | 17.4 | | | | | | | | FB-C3 | 6.7 | 712 |
| I2 | 290.4 | | | 17.4 | | | | | | | FB-I2 | 19.1 | 1530 |
| I3 | 290.4 | | | | 32.3 | | | | | | FB-I3 | 15.8 | 1436 |
| I4 | 290.4 | | | | 17.4 | | | | | | FB-I4 | 15.6 | 1430 |
| I1 | 290.4 | | | | | 17.4 | | | | | FB-I1 | 13.0 | 1435 |
| I5 | 290.4 | | | | 15.4 | | | | | 2.0 | FB-I5 | 12.2 | 1250 |
| C4 | 290.4 | | | | 14.2 | | 3.2 | | | | FB-C4 | 9.2 | 985 |
| C5 | 290.4 | | | | 5.8 | | 11.6 | | | | FB-C5 | 5.0 | 625 |
| C1 | 290.4 | | | | | | 11.6 | | 5.8 | | FB-C1 | 5.5 | 889 |
| C6 | 290.4 | | | | 13.4 | | | 4.0 | | | FB-C6 | 8.1 | 795 |
| C7 | 290.4 | | | | 10.4 | | | 7.0 | | | FB-C7 | 4.5 | 590 |
| C8 | 290.4 | | | | 5.8 | | | 11.6 | | | FB-C8 | 4.4 | 610 |
| C9 | 290.4 | | | | 8.7 | | | | | 8.7 | FB-C9 | 7.1 | 963 |
| C10 | 290.4 | | | | 5.8 | | | | | 11.6 | FB-C10 | 5.8 | 740 |

## Claims

1. A composition comprising a constituent-A, which constituent-A consists of:

    - a polylysine component, and
    - a fibrous component,

    wherein

    the polylysine component is selected from the group consisting of polylysines-X and mixtures thereof, and wherein the polylysines-X are selected from the group consisting of hyperbranched polylysines and primary ammonium salt of hyperbranched polylysines, wherein each one of the polylysines-X has a degree of branching as determined by $^1$H-NMR spectroscopy disclosed in the specification, of at least 0.30 and at most 0.60, an apparent viscosity as determined by the Rheometry Method disclosed in the specification, of at least 400 and at most 8000 mPa.s, and a gel content as determined by the Gel-Content Method disclosed in the specification, of at most 4.0 %, and
    the fibrous component consists of at least one fibrous element which fibrous element comprises vegetable fibers, and wherein the fibrous element is free of any fibers other than the vegetable fibers,
    and wherein
    the composition is free of any fibers other than the vegetable fibers of the fibrous component,
    and wherein
    the composition optionally comprises a constituent-B which is selected from the group consisting of proteins and mixtures thereof, and the constituent-B is different and distinct from any other component and constituent of the composition, in an amount of at most 0.30 wt.% of the composition,
    and wherein
    the composition optionally comprises a constituent-C which is selected from the group consisting of polyphenolic macromolecular compounds and mixtures thereof, wherein each of the polyphenolic macromolecular compounds is a macromolecular compound which bears a multitude of phenol or polyhydroxybenzene radicals, and the constituent-C is different and distinct from any other component and constituent of the composition, in an amount such that the ratio of the total weight of the constituent-C divided by the total weight of the polylysine component is at most 0.40.

2. The composition as claimed in claim 1, wherein the polylysines-X are selected from the group consisting of hyperbranched polylysines and primary ammonium salt of hyperbranched polylysines wherein the anion that counters the at least one primary ammonium cation ($-NH_3^+$) present in the structure of the primary ammonium salt of hyperbranched polylysines is selected from the group consisting of fluoride, chloride, bromide and iodide.

3. The composition as claimed in claim 1, wherein the polylysines-X are hyperbranched polylysines.

4. The composition as claimed in any one of the preceding claims, wherein the composition is free of constituent-B.

5. The composition as claimed in any one of the preceding claims, wherein the ratio of the total weight of the constituent-C divided by the total weight of the polylysine component is at most 0.15, preferably the composition is free of constituent-C.

6. The composition as claimed in any one of the preceding claims, wherein each one of the polylysines-X has a degree of branching of at least 0.30 and at most 0.55, preferably at least 0.30 and at most 0.50, more preferably at least 0.30 and at most 0.45, most preferably at least 0.30 and at most 0.40.

7. The composition as claimed in any one of the preceding claims, wherein each one of the polylysines-X has an apparent viscosity of at least 400 and at most 6000, more preferably at least 400 and at most 4000, even more preferably at least 400 and at most 2500, most preferably at least 400 and at most 2000, for example at least 400 and at most 1800, for example at least 400 and at most 1550, for example at least 450 and at most 8000, for example at least 450 and at most 6000, for example at least 450 and at most 4000, for example at least 450 and at most 2000, for example at least 450 and at most 1800, for example at least 450 and at most 1550 mPa.s.

8. The composition as claimed in any one of the preceding claims, wherein each one of the polylysines-X has a gel content of at most 1.0, preferably at most 0.5, more preferably at most 0.2, even more preferably at most 0.1,

especially a gel content of 0.0 %.

**9.** The composition as claimed in any one of the preceding claims 1 to 6, wherein each one of the polylysines-X has:

- a number average molecular weight (abbreviated as $M_n$) weight as determined by the Gel-Permeation Chromatography Method disclosed in the specification, of at least 1100 and at most 10000 Da, preferably at least 1500 and at most 8000 Da, more preferably at least 2000 at most 6000 Da,
- a weight average molecular weight (abbreviated as $M_w$) as determined by the Gel-Permeation Chromatography Method disclosed in the specification, of at least 3000 and at most 50000 Da, preferably at least 5000 and at most 40000 Da, more preferably at least 10000 and at most 30000 Da,
- a polydispersity calculated as the ratio of $M_w/M_n$, of at least 2 and at most 15, preferably at least 2 and at most 10, more preferably at least 3 and at most 8,
- an apparent viscosity of at least 400 and at most 6000, more preferably at least 400 and at most 4000, even more preferably at least 400 and at most 2500, most preferably at least 400 and at most 2000, for example at least 400 and at most 1800, for example at least 400 and at most 1550, for example at least 450 and at most 8000, for example at least 450 and at most 6000, for example at least 450 and at most 4000, for example at least 450 and at most 2000, for example at least 450 and at most 1800, for example at least 450 and at most 1550 mPa.s,
- an amine number as determined by the Titration Method disclosed in the specification, of at least 200 and at most 700 mg KOH/g, preferably at least 250 and at most 600 mg KOH/g, more preferably at least 250 and at most 500 mg KOH/g, especially at least 300 and at most 400 mg KOH/g,
- an acid value as determined by the Titration Method disclosed in the specification, of at least 10 and at most 150 mg KOH/g, preferably at least 30 and at most 100, more preferably at least 40 and at most 90 mg KOH/g, and
- a gel content of at most 3.0 %, preferably at most 2.0 % more preferably at most 1.0 %, even more preferably at most 0.5 %, most preferably at most 0.1 %, especially at most 0.05 %, more especially a gel content of 0.0 %.

**10.** The composition as claimed in any one of the preceding claims, wherein the polylysine component is present in an amount of at least 0.1 and at most 30.0 wt% of the composition.

**11.** The composition as claimed in any one of the preceding claims, wherein the vegetable fibers are selected from the group consisting of natural cellulose fibers, natural lignocellulosic fibers, and mixtures thereof.

**12.** The composition as claimed in any one of the preceding claims 1 to 10, wherein the vegetable fibers are selected from the group consisting of wood fibers, reed fibers, bamboo fibers, seaweed, jute fibers, flax fibers, hemp fibers, ramie fibers, manila fibers, sisal fibers, kapok fibers, cotton, banana fibers, coconut fibers, rye fibers, wheat fibers, rice fibers, kenaf fibers, straw fibers, grass fibers, leaf fibers, and mixtures thereof.

**13.** The composition as claimed in any one of the preceding claims 1 to 10, wherein the vegetable fibers are selected from the group consisting of wood fibers, reed fibers, and mixtures thereof, preferably the vegetable fibers are wood fibers.

**14.** The composition as claimed in any one of claims 1 to 13, wherein the fibrous element is selected from the group consisting of fibers, filaments, yarns, strips, strands, threads, staple fiber yarns, particles, chips, shavings, flakes, lamellae, pulp, and mixtures thereof; preferably the fibrous element is selected from the group consisting of fibers, filaments, yarns, threads, staple fiber yarns, particles, chips, shavings, flakes, pulp, and mixtures thereof; more preferably the fibrous element is a wood chip.

**15.** The composition as claimed in any one of claims 1 to 10, wherein the fibrous component consists of wood chips wherein the d50 which is the median value of the particle size distribution of the wood chips determined according to the ISO 17827-1:2016, is at least 1 and at most 50, preferably at least 1 and at most 40, for example at least 1 and most 30, for example at least 1 and at most 20, for example at least 1 and at most 15, for example at least 1 and at most 10, for example at least 1 and at most 8 mm.

**16.** A process for obtaining an object wherein the process comprises the steps of:

- providing a composition as claimed in any one of the preceding claims 1 to 15; and
- subjecting the composition to heat and/or pressure and/or vacuum, preferably simultaneous heat and pressure, to form an object, and

- collecting the object.

**17.** An object obtained by a process as claimed in claim 16.

**18.** The object as claimed in claim 17, wherein the object is selected from the group consisting of sheets, tapes, sticks, strips, films, cloths, containers, boards, panels, beams, frames, planks, engineered wood.

**19.** The object as claimed in claim 17, wherein the object is engineered wood.

**20.** The object as claimed in claim 17, wherein the object is fibreboard.

**21.** An article comprising: a) a part which is solid at 23 °C and 1 atm; and one or both of b) and c), wherein b) is a composition as claimed in any one of claims 1-15, and c) is an object as claimed in any one the claims 17 to 20.

**22.** Use of any one or any combination of the i) to iii):

i) a composition as claimed in any one of the claims 1 to 15;
ii) an object as claimed in any one of claims 17 to 20;
iii) an article as claimed in claim 21;

in absorbents, 3D-printing, automotive applications, marine applications, aerospace applications, medical items, defense applications, sports/recreational applications, architectural applications, bottling applications, household applications, machinery applications, can applications, coil applications, energy related applications, and electricity related applications.

**Patentansprüche**

**1.** Zusammensetzung, die einen Bestandteil-A umfasst, wobei der Bestandteil-A aus Folgendem besteht:

- einer Polylysin-Komponente und
- einer Faserkomponente,

wobei

die Polylysin-Komponente ausgewählt ist aus der Gruppe bestehend aus Polylysinen-X und Mischungen davon und wobei die Polylysine-X ausgewählt sind aus der Gruppe bestehend aus hyperverzweigten Polylysinen und einem primären Ammoniumsalz von hyperverzweigten Polylysinen, wobei jedes der Polylysine-X einen mittels $^1$H-NMR-Spektroskopie gemäß der Offenbarung in der Beschreibung bestimmten Verzweigungsgrad von mindestens 0,30 und höchstens 0,60, eine mit dem Rheometrieverfahren gemäß der Offenbarung in der Beschreibung bestimmte Scheinviskosität von mindestens 400 und höchstens 8000 mPa.s und einen mit dem Gelgehaltverfahren gemäß der Offenbarung in der Beschreibung bestimmten Gelgehalt von höchstens 4,0 % aufweist, und
die Faserkomponente aus mindestens einem Faserelement besteht, wobei das Faserelement Pflanzenfasern umfasst und wobei das Faserelement frei von Fasern ist, die von den Pflanzenfasern verschieden sind, und wobei
die Zusammensetzung frei von Fasern ist, die von den Pflanzenfasern der Faserkomponente verschieden sind, und wobei
die Zusammensetzung gegebenenfalls einen Bestandteil-B umfasst, der ausgewählt ist aus der Gruppe bestehend aus Proteinen und Mischungen davon, und der Bestandteil-B von jeder anderen Komponente und jedem anderen Bestandteil der Zusammensetzung verschieden und getrennt ist, in einer Menge von höchstens 0,30 Gew.-% der Zusammensetzung,
und wobei
die Zusammensetzung gegebenenfalls einen Bestandteil-C, der ausgewählt ist aus der Gruppe bestehend aus polyphenolischen makromolekularen Verbindungen und Mischungen davon, wobei jede der polyphenolischen makromolekularen Verbindungen eine makromolekulare Verbindung ist, die eine Vielzahl von Phenol- oder Polyhydroxybenzolresten trägt und der Bestandteil-C von jeder anderen Komponente und jedem anderen Bestandteil der Zusammensetzung verschieden ist, in einer solchen Menge umfasst, dass das Verhältnis des

Gesamtgewichts des Bestandteils-C dividiert durch das Gesamtgewicht der Polylysin-Komponente höchstens 0,40 beträgt.

**2.** Zusammensetzung nach Anspruch 1, wobei die Polylysine-X ausgewählt sind aus der Gruppe bestehend aus hyperverzweigten Polylysinen und einem primären Ammoniumsalz von hyperverzweigten Polylysinen, wobei das Anion, welches das mindestens eine primäre Ammoniumkation ($-NH_3^+$) neutralisiert, das in der Struktur des primären Ammoniumsalzes von hyperverzweigten Polylysinen vorhanden ist, ausgewählt ist aus der Gruppe bestehend aus Fluorid, Chlorid, Bromid und Iodid.

**3.** Zusammensetzung nach Anspruch 1, wobei es sich bei den Polylysinen-X um hyperverzweigte Polylysine handelt.

**4.** Zusammensetzung nach einem der vorhergehenden Ansprüche, wobei die Zusammensetzung frei von Bestandteil-B ist.

**5.** Zusammensetzung nach einem der vorhergehenden Ansprüche, wobei das Verhältnis des Gesamtgewichts des Bestandteils-C dividiert durch das Gesamtgewicht der Polylysin-Verbindung höchstens 0,15 beträgt, wobei die Zusammensetzung vorzugsweise frei von Bestandteil-C ist.

**6.** Zusammensetzung nach einem der vorhergehenden Ansprüche, wobei jedes der Polylysine-X einen Verzweigungsgrad von mindestens 0,30 und höchstens 0,55, vorzugsweise mindestens 0,30 und höchstens 0,50, stärker bevorzugt mindestens 0,30 und höchstens 0,45, am meisten bevorzugt mindestens 0,30 und höchstens 0,40, aufweist.

**7.** Zusammensetzung nach einem der vorhergehenden Ansprüche, wobei jedes der Polylysine-X eine Scheinviskosität von mindestens 400 und höchstens 6000, stärker bevorzugt mindestens 400 und höchstens 4000, sogar noch stärker bevorzugt mindestens 400 und höchstens 2500, am meisten bevorzugt mindestens 400 und höchstens 2000, beispielsweise mindestens 400 und höchstens 1800, beispielsweise mindestens 400 und höchstens 1550, beispielsweise mindestens 450 und höchstens 8000, beispielsweise mindestens 450 und höchstens 6000, beispielsweise mindestens 450 und höchstens 4000, beispielsweise mindestens 450 und höchstens 2000, beispielsweise mindestens 450 und höchstens 1800, beispielsweise mindestens 450 und höchstens 1550 mPa.s, aufweist.

**8.** Zusammensetzung nach einem der vorhergehenden Ansprüche, wobei jedes der Polylysine-X einen Gelgehalt von höchstens 1,0, vorzugsweise höchstens 0,5, stärker bevorzugt höchstens 0,2, sogar noch stärker bevorzugt höchstens 0,1, insbesondere einen Gelgehalt von 0,0 %, aufweist.

**9.** Zusammensetzung nach einem der vorhergehenden Ansprüche 1 bis 6, wobei jedes der Polylysine-X Folgendes aufweist:

- ein mittels des Gelpermeationschromatographie-Verfahrens gemäß der Offenbarung in der Beschreibung bestimmtes Zahlenmittel der Molmasse (abgekürzt als $M_n$) von mindestens 1100 und höchstens 10000 Da, vorzugsweise mindestens 1500 und höchstens 8000 Da, stärker bevorzugt mindestens 2000 und höchstens 6000 Da,
- ein mittels des Gelpermeationschromatographie-Verfahrens gemäß der Offenbarung in der Beschreibung bestimmtes Massenmittel der Molmasse (abgekürzt als $M_w$) von mindestens 3000 und höchstens 50000 Da, vorzugsweise mindestens 5000 und höchstens 40000 Da, stärker bevorzugt mindestens 10000 und höchstens 30000 Da,
- eine als Verhältnis $M_w/M_n$ berechnete Polydispersität von mindestens 2 und höchstens 15, vorzugsweise mindestens 2 und höchstens 10, stärker bevorzugt mindestens 3 und höchstens 8,
- eine Scheinviskosität von mindestens 400 und höchstens 6000, stärker bevorzugt mindestens 400 und höchstens 4000, sogar noch stärker bevorzugt mindestens 400 und höchstens 2500, am meisten bevorzugt mindestens 400 und höchstens 2000, beispielsweise mindestens 400 und höchstens 1800, beispielsweise mindestens 400 und höchstens 1550, beispielsweise mindestens 450 und höchstens 8000, beispielsweise mindestens 450 und höchstens 6000, beispielsweise mindestens 450 und höchstens 4000, beispielsweise mindestens 450 und höchstens 2000, beispielsweise mindestens 450 und höchstens 1800, beispielsweise mindestens 450 und höchstens 1550 mPa.s,
- eine mit dem Titrationsverfahren gemäß der Offenbarung in der Beschreibung bestimmte Aminzahl von mindestens 200 und höchstens 700 mg KOH/g, vorzugsweise mindestens 250 und höchstens 600 mg KOH/g, stärker bevorzugt mindestens 250 und höchstens 500 mg KOH/g, insbesondere mindestens 300 und höchstens 400 mg KOH/g,

- eine mit dem Titrationsverfahren gemäß der Offenbarung in der Beschreibung bestimmte Säurezahl von mindestens 10 und höchstens 150 mg KOH/g, vorzugsweise mindestens 30 und höchstens 100, stärker bevorzugt mindestens 40 und höchstens 90 mg KOH/g, und
- einen Gelgehalt von höchstens 3,0 %, vorzugsweise höchstens 2,0 %, stärker bevorzugt höchstens 1,0 %, sogar noch mehr bevorzugt höchstens 0,5 %, am meisten bevorzugt höchstens 0,1 %, insbesondere höchstens 0,05 %, noch spezieller einen Gelgehalt von 0,0 %.

**10.** Zusammensetzung nach einem der vorhergehenden Ansprüche, wobei die Polylysin-Komponente in einer Menge von mindestens 0,1 und höchstens 30,0 Gew.-% der Zusammensetzung vorhanden ist.

**11.** Zusammensetzung nach einem der vorhergehenden Ansprüche, wobei die Pflanzenfasern ausgewählt sind aus der Gruppe bestehend aus natürlichen Cellulosefasern, natürlichen Lignocellulosefasern und Mischungen davon.

**12.** Zusammensetzung nach einem der vorhergehenden Ansprüche 1 bis 10, wobei die Pflanzenfasern ausgewählt sind aus der Gruppe bestehend aus Holzfasern, Schilffasern, Bambusfasern, Tang, Jutefasern, Flachsfasern, Hanffasern, Ramiefasern, Manilafasern, Sisalfasern, Kapokfasern, Baumwolle, Bananenfasern, Kokosfasern, Roggenfasern, Weizenfasern, Reisfasern, Kenaffasern, Strohfasern, Grasfasern, Blattfasern und Mischungen davon.

**13.** Zusammensetzung nach einem der vorhergehenden Ansprüche 1 bis 10, wobei die Pflanzenfasern ausgewählt sind aus der Gruppe bestehend aus Holzfasern, Schilffasern und Mischungen davon, wobei die Pflanzenfasern vorzugsweise Holzfasern sind.

**14.** Zusammensetzung nach einem der Ansprüche 1 bis 13, wobei das Faserelement ausgewählt ist aus der Gruppe bestehend aus Fasern, Filamenten, Garnen, Streifen, Strängen, Fäden, Stapelfasergarnen, Partikeln, Schnitzeln, Spänen, Flocken, Lamellen, Zellstoff und Mischungen davon; wobei das Faserelement vorzugsweise ausgewählt ist aus der Gruppe bestehend aus Fasern, Filamenten, Garnen, Fäden, Stapelfasergarnen, Partikeln, Schnitzeln, Spänen, Flocken, Zellstoff und Mischungen davon; stärker bevorzugt ist das Faserelement ein Holzschnitzel.

**15.** Zusammensetzung nach einem der Ansprüche 1 bis 10, wobei die Faserkomponente aus Holzschnitzeln besteht, wobei d50, bei dem es sich um den gemäß ISO 17827-1:2016 bestimmten Medianwert der Partikelgrößenverteilung der Holzschnitzel handelt, mindestens 1 und höchstens 50, vorzugsweise mindestens 1 und höchstens 40, beispielsweise mindestens 1 und höchstens 30, beispielsweise mindestens 1 und höchstens 20, beispielsweise mindestens 1 und höchstens 15, beispielsweise mindestens 1 und höchstens 10, beispielsweise mindestens 1 und höchstens 8 mm, beträgt.

**16.** Verfahren zum Erhalt eines Gegenstandes, wobei das Verfahren die folgenden Schritte umfasst:

- das Bereitstellen einer Zusammensetzung nach einem der vorhergehenden Ansprüche 1 bis 15 und
- das Einwirkenlassen von Wärme und/oder Druck und/oder Vakuum, vorzugsweise gleichzeitig von Wärme und Druck, auf die Zusammensetzung, wodurch ein Gegenstand gebildet wird, und
- das Isolieren des Gegenstandes.

**17.** Gegenstand, der durch ein Verfahren nach Anspruch 16 erhalten wird.

**18.** Gegenstand nach Anspruch 17, wobei der Gegenstand ausgewählt ist aus der Gruppe bestehend aus Bahnen, Bändern, Stäben, Streifen, Folien, Stoffen, Behältern, Platten, Tafeln, Trägern, Rahmen, Bohlen, Kunstholz.

**19.** Gegenstand nach Anspruch 17, wobei es sich beim Gegenstand um Kunstholz handelt.

**20.** Gegenstand nach Anspruch 17, wobei es sich beim Gegenstand um eine Faserplatte handelt.

**21.** Gegenstand, der Folgendes umfasst: a) einen Teil, der bei 23 °C und 1 atm fest ist; und b) und/oder c), wobei b) eine Zusammensetzung nach einem der Ansprüche 1-15 ist und c) ein Gegenstand nach einem der Ansprüche 17 bis 20 ist.

**22.** Verwendung eines beliebigen oder einer beliebigen Kombination von i) bis iii):

i) einer Zusammensetzung nach einem der Ansprüche 1 bis 15;

ii) eines Gegenstands nach einem der Ansprüche 17 bis 20;
iii) eines Gegenstands nach Anspruch 21;

in Absorptionsmitteln, im 3D-Druck, in Automobilanwendungen, Schiffsanwendungen, Luft- und Raumfahrtanwendungen, medizinischen Gegenständen, Verteidigungsanwendungen, Sport-/Freizeitbereich-Anwendungen, Architekturanwendungen, Abfüllanwendungen, Haushaltsanwendungen, Maschinenanwendungen, Dosenanwendungen, Spulenanwendungen, energiebezogenen Anwendungen und elektrizitätsbezogenen Anwendungen.

## Revendications

**1.** Composition comprenant un constituant-A, lequel constituant-A étant constitué de :

- un composant polylysine, et
- un composant fibreux,

dans laquelle

le composant polylysine étant choisi dans le groupe constitué par des polylysines-X et des mélanges correspondants, et les polylysines-X étant choisies dans le groupe constitué par des polylysines hyperramifiées et un sel d'ammonium primaire de polylysines hyperramifiées, chacune des polylysines-X ayant un degré de ramification comme déterminé par spectroscopie de RMN du $^1H$ divulguée dans la description, d'au moins un 0,30 et d'au plus 0,60, une viscosité apparente comme déterminée par le procédé de rhéométrie divulgué dans la description, d'au moins 400 et d'au plus 8 000 mPa.s, et une teneur en gel comme déterminée par le procédé de teneur en gel divulgué dans la description, d'au plus 4,0 %, et
le composant fibreux étant constitué d'au moins un élément fibreux, lequel élément fibreux comprenant des fibres végétales, et l'élément fibreux étant exempt de quelconques fibres autres que les fibres végétales,
et,
la composition étant exempte de quelconques fibres autres que les fibres végétales du composant fibreux,
et,
la composition comprenant éventuellement un constituant-B qui est choisi dans le groupe constitué par des protéines et des mélanges correspondants, et le constituant-B étant différent et distinct d'un quelconque autre composant et constituant de la composition, en une quantité d'au plus 0,30 % en poids de la composition,
et,
la composition comprenant éventuellement un constituant-C qui est choisi dans le groupe constitué par des composés macromoléculaires polyphénoliques et des mélanges correspondants, chacun des composés macromoléculaires polyphénoliques étant un composé macromoléculaire qui porte une multitude de radicaux phénol ou polyhydroxybenzène, et le constituant-C étant différent et distinct d'un quelconque autre composant et constituant de la composition, en une quantité telle que le rapport du poids total du constituant-C divisé par le poids total du composant polylysine est d'au plus 0,40.

**2.** Composition selon la revendication 1, les polylysines-X étant choisies dans le groupe constitué par des polylysines hyperramifiées et un sel d'ammonium primaire de polylysines hyperramifiées, l'anion qui contre l'au moins un cation ammonium primaire ($-NH_3^+$) présent dans la structure du sel d'ammonium primaire de polylysines hyperramifiées étant choisi dans le groupe constitué par fluorure, chlorure, bromure et iodure.

**3.** Composition selon la revendication 1, les polylysines-X étant des polylysines hyperramifiées.

**4.** Composition selon l'une quelconque des revendications précédentes, la composition étant exempte de constituant-B.

**5.** Composition selon l'une quelconque des revendications précédentes, le rapport du poids total du constituant-C divisé par le poids total du composant polylysine étant d'au plus 0,15, préférablement la composition étant exempte de constituant-C.

**6.** Composition selon l'une quelconque des revendications précédentes, chacune des polylysines-X ayant un degré de ramification d'au moins 0,30 et d'au plus 0,55, préférablement d'au moins 0,30 et d'au plus 0,50, plus préférablement d'au moins 0,30 et d'au plus 0,45, plus préférablement d'au moins 0,30 et d'au plus 0,40.

7. Composition selon l'une quelconque des revendications précédentes, chacune des polylysines-X ayant une viscosité apparente d'au moins 400 et d'au plus 6 000, plus préférablement d'au moins 400 et d'au plus 4 000, encore plus préférablement d'au moins 400 et d'au plus 2 500, le plus préférablement d'au moins 400 et d'au plus 2 000, par exemple d'au moins 400 et d'au plus 1 800, par exemple d'au moins 400 et d'au plus 1 550, par exemple d'au moins 450 et d'au plus 8 000, par exemple d'au moins 450 et d'au plus 6 000, par exemple d'au moins 450 et d'au plus 4 000, par exemple d'au moins 450 et d'au plus 2 000, par exemple d'au moins 450 et d'au plus 1 800, par exemple d'au moins 450 et d'au plus 1 550 mPa.s.

8. Composition selon l'une quelconque des revendications précédentes, chacune des polylysines-X ayant une teneur en gel d'au plus 1,0, préférablement d'au plus 0,5, plus préférablement d'au plus 0,2, encore plus préférablement d'au plus 0,1, notamment une teneur en gel de 0,0 %.

9. Composition selon l'une quelconque des revendications 1 à 6 précédentes, chacune des polylysines-X ayant :

- un poids moléculaire moyen en nombre (abrégé comme $M_n$) comme déterminé par le procédé de chromatographie à perméation de gel divulgué dans la description, d'au moins 1 100 et d'au plus 10 000 Da, préférablement d'au moins 1 500 et d'au plus 8 000 Da, plus préférablement d'au moins 2 000 et d'au plus 6 000 Da,
- un poids moléculaire moyen en poids (abrégé comme $M_w$) comme déterminé par le procédé de chromatographie à perméation de gel divulgué dans la description, d'au moins 3 000 et d'au plus 50 000 Da, préférablement d'au moins 5 000 est d'au plus 40 000 Da, plus préférablement d'au moins 10 000 est d'au plus 30 000 Da,
- une polydispersité calculée comme le rapport de $M_w/M_n$, d'au moins 2 et d'au plus 15, préférablement d'au moins 2 et d'au plus 10, plus préférablement d'au moins 3 et d'au plus 8,
- une viscosité apparente d'au moins 400 et d'au plus 6 000, plus préférablement d'au moins 400 et d'au plus 4 000, encore plus préférablement d'au moins 400 et d'au plus 2 500, le plus préférablement d'au moins 400 et d'au plus 2 000, par exemple d'au moins 400 et d'au plus 1 800, par exemple d'au moins 400 et d'au plus 1 550, par exemple d'au moins 450 et d'au plus 8 000, par exemple d'au moins 450 et d'au plus 6 000, par exemple d'au moins 450 et d'au plus 4 000, par exemple d'au moins 450 et d'au plus 2 000, par exemple d'au moins 450 et d'au plus 1 800, par exemple d'au moins 450 et d'au plus 1 550 mPa.s,
- un indice d'amine comme déterminé par le procédé de titrage divulgué dans la description, d'au moins 200 et d'au plus 700 mg de KOH/g, préférablement d'au moins 250 et d'au plus 600 mg de KOH/g, plus préférablement d'au moins 250 et d'au plus 500 mg de KOH/g, notamment d'au moins 300 et d'au plus 400 mg de KOH/g,
- un indice d'acide comme déterminé par le procédé de titrage divulgué dans la description, d'au moins 10 et d'au plus 150 mg de KOH/g, préférablement d'au moins 30 et d'au plus 100, plus préférablement d'au moins 40 et d'au plus 90 mg de KOH/g, et
- une teneur en gel d'au plus 3,0 %, préférablement d'au plus 2,0 %, plus préférablement d'au plus 1,0 %, encore plus préférablement d'au plus 0,5 %, le plus préférablement d'au plus 0,1 %, notamment d'au plus 0,05 %, plus notamment une teneur en gel de 0,0 %.

10. Composition selon l'une quelconque des revendications précédentes, le composant polylysine étant présent en une quantité d'au moins 0,1 et d'au plus 30,0 % en poids de la composition.

11. Composition selon l'une quelconque des revendications précédentes, les fibres végétales étant choisies dans le groupe constitué par des fibres de cellulose naturelles, des fibres lignocellulosiques naturelles et des mélanges correspondants.

12. Composition selon l'une quelconque des revendications 1 à 10 précédentes, les fibres végétales étant choisies dans le groupe constitué par des fibres de bois, des fibres de roseau, des fibres de bambou, des algues, des fibres de jute, des fibres de lin, des fibres de chanvre, des fibres de ramie, des fibres de manille, des fibres de sisal, des fibres de kapok, du coton, des fibres de banane, des fibres de coco, des fibres de seigle, des fibres de blé, des fibres de riz, des fibres de kénaf, des fibres de paille, des fibres d'herbe, des fibres de feuilles, et des mélanges correspondants.

13. Composition selon l'une quelconque des revendications 1 à 10 précédentes, les fibres végétales étant choisies dans le groupe constitué par des fibres de bois, des fibres de roseau, et des mélanges correspondants, préférablement les fibres de végétales étant des fibres de bois.

14. Composition selon l'une quelconque des revendications 1 à 13, l'élément fibreux étant choisi dans le groupe constitué par des fibres, des filaments, des fils, des rubans, des brins, des filets, des fils de fibres discontinues, des particules,

des copeaux, des éclats, des flocons, une pulpe et des mélanges correspondants ; préférablement l'élément fibreux étant choisi dans le groupe constitué par des fibres, des filaments, des copeaux, des éclats, des flocons, une pulpe et des mélanges correspondants ; plus préférablement l'élément fibreux étant un copeau de bois.

**15.** Composition selon l'une quelconque des revendications 1 à 10, le composant fibreux étant constitué de copeaux de bois, le d50 qui est la valeur médiane de la distribution de tailles de particule des copeaux de bois déterminé selon la norme ISO 17827-1:2016, étant d'au moins 1 et d'au plus 50, préférablement d'au moins 1 et d'au plus 40, par exemple d'au moins 1 et d'au plus 30, par exemple d'au moins 1 et d'au plus 20, par exemple d'au moins 1 et d'au plus 15, par exemple d'au moins 1 et d'au plus 10, par exemple d'au moins 1 et d'au plus 8 mm.

**16.** Procédé pour l'obtention d'un objet, le procédé comprenant les étapes de :

- fourniture d'une composition selon l'une quelconque des revendications 1 à 15 précédentes ; et
- soumission de la composition à de la chaleur et/ou de la pression et/ou du vide, préférablement simultanément de la chaleur et de la pression, pour former un objet, et
- collecte de l'objet.

**17.** Objet obtenu par un procédé selon la revendication 16.

**18.** Objet selon la revendication 17, l'objet étant choisi dans le groupe constitué par des feuilles, des bandes, des bâtons, des rubans, des films, des vêtements, des récipients, des tableaux, des panneaux, des faisceaux, des cadres, des planches, du bois d'ingénierie.

**19.** Objet selon la revendication 17, l'objet étant du bois d'ingénierie.

**20.** Objet selon la revendication 17, l'objet étant un panneau de fibres.

**21.** Article comprenant : a) une partie qui est solide à 23 °C et 1 atm ; et l'un ou les deux parmi b) et c), b) étant une composition selon l'une quelconque des revendications 1 à 15, et c) étant un objet selon l'une quelconque des revendications 17 à 20.

**22.** Utilisation selon l'une quelconque ou une quelconque combinaison des i) à iii) :

i) une composition selon l'une quelconque des revendications 1 à 15 ;
ii) un objet selon l'une quelconque des revendications 17 à 20 ;
iii) un article selon la revendication 21 ;

dans des absorbants, une impression 3D, des applications d'automobile, des applications marines, des applications aérospatiales, des objets médicaux, des applications dans la défense, des applications dans les sports/loisirs, des applications architecturales, des applications de mise en bouteilles, des applications ménagères, des applications de machines, des applications de canette, des applications de bobines, des applications liées à l'énergie et des applications liées à l'électricité.

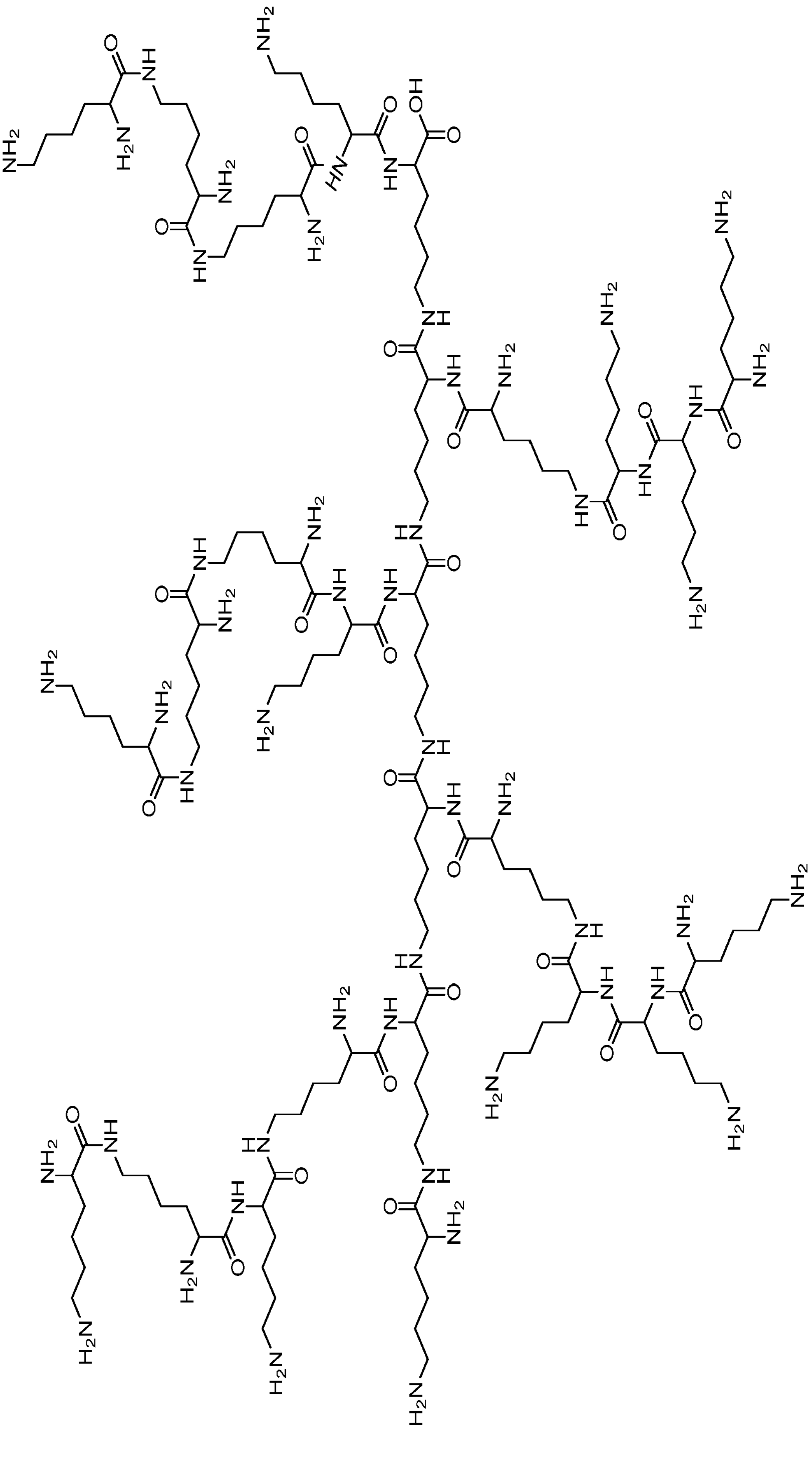

Figure 1

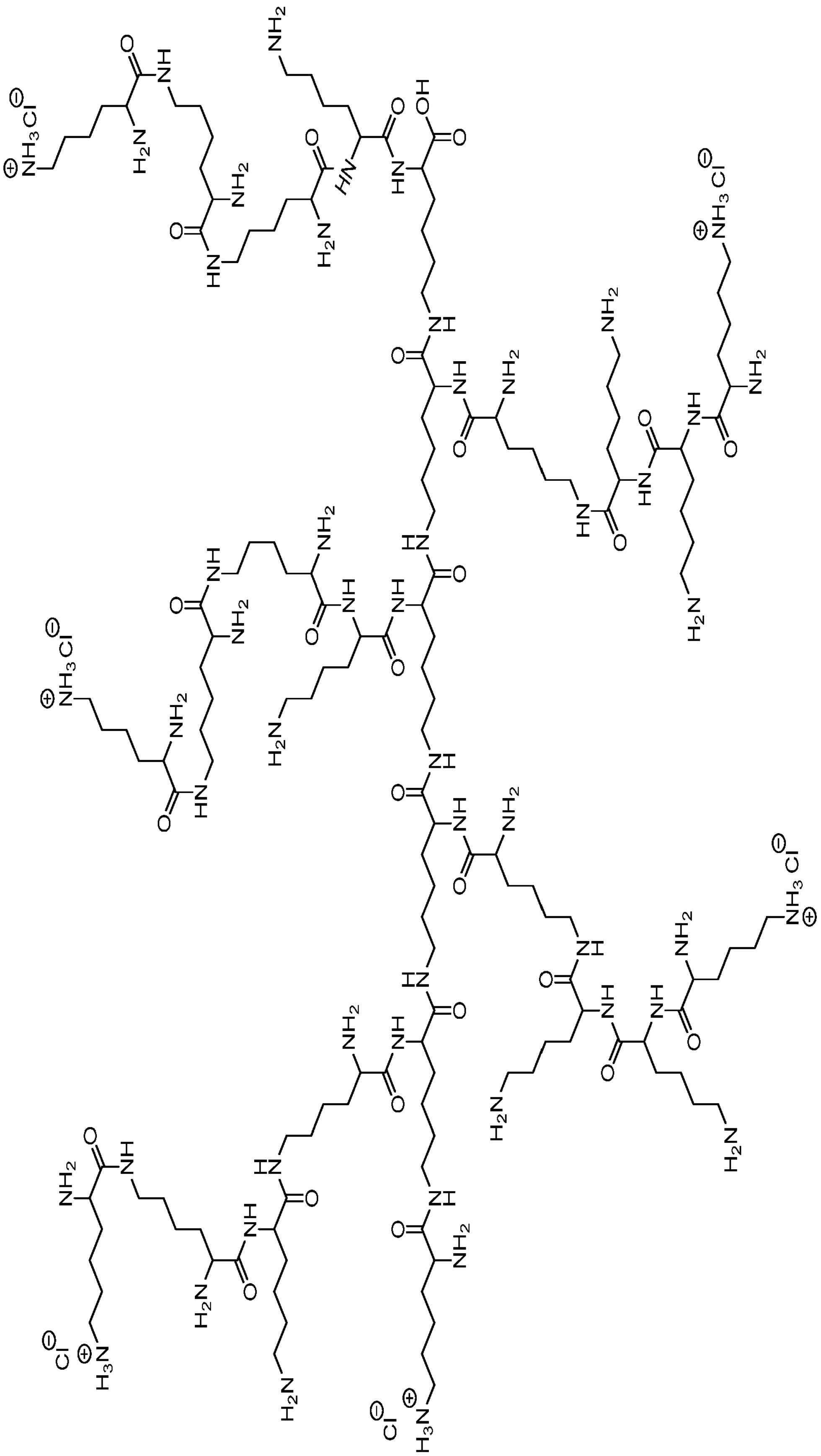

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016009062 A1
- US 20070277928 A1
- US 20070277928 A
- WO 2008057390 A2
- CN 110903786 A
- WO 2016009054 A1
- US 8846842 B2
- WO 2003064452 A
- WO 0071600 A
- WO 2007060119 A
- US 20130123148 A
- WO 2016062578 A1


### Non-patent literature cited in the description


- *Macromolecules,* 2002, vol. 35, 8718-8723
- **RODRIGUEZ-HERNANDEZ et al.** *Biomacromolecules,* 2003, vol. 4, 249-258
- **BIRCHALL et al.** *Chem. Commun.,* 1998, 1335-1336
- **PLAQUET.** *Biochimie,* 1975, vol. 57, 1395-1396
- **HARADA.** *Bull. Chem. Soc. Japan,* 1959, vol. 32, 1007-1008
- **ROHLFING.** *Archives of Biochemistry and Biophysics,* 1969, vol. 130, 441-448
- **FOX et al.** *BioSystems,* 1976, vol. 8, 40-44
- **HENNON et al.** *Biochimie,* 1971, vol. 53, 215-223
- *CHEMICAL ABSTRACTS,* 8061-54-9
- *CHEMICAL ABSTRACTS,* 25322-68-3